# EUROPEAN PATENT SPECIFICATION

(11) **EP 1 778 511 B1**
(45) Date of publication and mention of the grant of the patent: **11.04.2012**
(21) Application number: 05774086.2
(22) Date of filing: 18.08.2005
(51) Int. Cl.: B60K 6/12, B60W 30/18, B60W 10/04, B60W 20/00, B60T 1/093

(54) **Hydraulic regenerative drive system and control**
Hydraulisch regeneratives Antriebssystem und Steuerung
Système d'entraînement hydraulique à récupération et contrôle

(30) Priority: 18.08.2004 AU 2004904705
(43) Date of publication of application: 02.05.2007
(73) Proprietor: Permo-Drive Research and Development Pty. Ltd., Ballina, NSW 2478 (AU)
(72) Inventor: MARSHALL, Christopher, Scott, Alstonville, NSW 2477 (AU); COOKE, Bradley, James, Greenbank QLD 4124 (AU); KEARSEY, Michael, James, Mannering Park, NSW 2259 (AU)
(74) Representative: Vleck, Jan Montagu
(86) International application number: PCT/AU2005/001241
(87) International publication number: WO 2006/017901

(56) References cited:
- US-A- 4 242 922
- US-A- 4 441 573
- US-A- 5 024 489
- US-A- 5 088 041
- US-B1- 6 170 587
- US-B2- 6 712 166

## Description

### Field of the invention

This invention relates to the field of hydraulic regenerative drive systems for vehicles. It relates also the controls for such systems.

### Background

Regenerative drive systems act in a first manner to retard a vehicle such that motive energy is extracted from the vehicle's drive train and provides rotary (kinetic) energy to a pump/motor unit, which pumps a fluid from a reservoir to a higher pressure accumulator. Such drive systems also act to propel a vehicle by the reverse process, in which the stored (potential) energy of the fluid is released from the accumulator and drives the pump/motor unit to impart energy to the drive train. Two examples of such a system are described in US Patent No. 4,986,383 to Evans, issued on January 22, 1991, and in US Patent No. 5,024,489 to Tanaka et al, issued on June 18, 1991.

US Patent no. 4,441,573 to Carman et al., which discloses a controller according to the preamble of claim 1 and a method according to the preamble of claim 8, provides a fuel-saving energy storage vehicle drive system which collects stores and uses energy normally lost in the braking or deceleration of the vehicle, provides automatically controlled operation of the engine under certain conditions, and provides automatically controlled use of the stored energy and engine respectively as alternative or supplemental prime movers for each other for driving the vehicle.

Regenerative drive systems have demonstrated the ability to cut fuel consumption in vehicles by 10 - 25%, although this is strongly dependent upon drive cycle and vehicle type (especially weight). There remains considerable interest in further improving such performance, either in the mechanical and hydraulic components themselves, or in control systems for the circuits constituted by these components.

### Summary

In general terms, there is disclosed a hydraulic regenerative drive system for a vehicle including an electronic controller receiving a nominal engine throttle signal and generating a time-variant torque signal therefrom, and wherein said controller controls (i) a controlled-torque retard mode of operation, in which a dynamically calculated retarding torque is imparted to the drive train of said vehicle, and (ii) a controlled-torque propulsion mode of operation, in which a dynamically calculated propelling torque is imparted to said drive train.

There is further disclosed a hydraulic regenerative drive system for a vehicle comprising:
an electronic controller receiving a nominal engine throttle signal and generating a time-variant torque signal therefrom;
a hydraulic control circuit receiving controlling signals from the electronic controller;
a reservoir in fluid communication with said hydraulic control circuit for storing hydraulic fluid;
a pump/motor unit having a swash plate providing variable displacement, said pump/motor unit being in fluid communication with said hydraulic control circuit and adapted for connection to the drive train of a vehicle, and having a speed sensor and a pressure sensor providing speed and pressure signals to said electronic controller; and
an accumulator in fluid communication with said hydraulic control circuit;
and wherein said controller converts said torque signal to swash plate angle and controls:
   (i) a controlled-torque retard mode of operation, in which said swash plate angle is controlled by said torque signal, said speed signal and said pressure signal to impart a dynamically calculated retarding torque to said drive train, and said pump/motor unit pumps fluid from said reservoir to said accumulator via said hydraulic control circuit, and
   (ii) a controlled-torque propulsion mode of operation, in which said swash plate angle is controlled by said torque signal, said speed signal and said pressure signal to impart a dynamically calculated propelling torque to said drive train, and said pump/motor unit motors under influence of fluid from said accumulator passing to said reservoir via said hydraulic control circuit;
and characterized in that said electronic controller performs said conversion between said torque signal and swash plate angle on the basis of searching predetermined characteristics of torque versus pressure versus speed for a set of swash plate angles to locate one or more closest torque values for the predetermined pressure and speed closest to the measured pump/motor unit pressure and pump/motor unit speed, and deriving a swash plate angle from the angle values corresponding to said closest torque values.

There is yet further disclosed an electronic controller for a hydraulic regenerative drive system, said controller receiving a nominal engine throttle signal and generating a time-variant torque signal therefrom, and wherein said controller converts said torque signal to swash plate angle of a pump/motor unit and controls (i) a controlled-torque retard mode of operation of said drive system, in which swash plate angle of said pump/motor unit is controlled by said torque signal, and a speed signal and a pressure signal from a pump/motor unit of said drive system, to impart a dynamically calculated retarding torque to a vehicle drive shaft; and (ii) a controlled-torque propulsion mode of operation, in which said swash plate angle of said pump/motor unit is controlled by said torque signal, said speed signal and said pressure signal to impart a dynamically calculated propelling torque to a drive shaft of said drive system and characterized in that said electronic controller performs said conversion between said torque signal and swash plate angle on the basis of searching predetermined characteristics of torque versus pressure versus speed for a set of swash plate angles to locate one or more closest torque values for the predetermined pressure and speed closest to the measured pump/motor unit pressure and pump/motor unit speed, and deriving a swash plate angle from the angle values corresponding to said closest torque values.

There is yet further disclosed a method for controlling operation of a hydraulic regenerative drive system comprising the steps of:
generating a time-variant torque signal from a nominal engine throttle signal; and
instructing either (i) a controlled-torque retard mode of operation, in which a swash plate angle of a pump/motor unit is controlled by said torque signal, and a speed signal and a pressure signal from a pump/motor unit of said drive system, to impart a dynamically calculated retarding torque to a vehicle drive shaft, or (ii) a controlled-torque propulsion mode of operation, in which said swash plate angle is controlled by said torque signal, said speed signal and said pressure signal to impart a dynamically calculated propelling torque to a drive shaft of said drive system; and
characterised by converting said torque signal to swash plate angle by searching predetermined characteristics of torque versus pressure versus speed for a set of swash plate angles to locate one or more closest torque values for the predetermined pressure and speed closest to measured pump/motor unit pressure and pump/motor unit speed, and deriving a swash plate angle from the angle values corresponding to said closest torque values.

Preferably, the electronic controller or a further method step outputs a modified engine throttle signal, and said torque signal and the vehicle's engine torque corresponding to the modified throttle signal are equal to the torque corresponding to the nominal engine throttle signal.

There additionally is disclosed a computer program product comprising a computer program stored on a storage medium, the program including code means for performing the method steps given above.

Other aspects of the system, controller and method are disclosed in the claims.

### Brief description of the drawings

Example embodiments of the present invention are now described with reference to the Figures, in which:
**Fig. 1** is a schematic block diagram of a Regenerative Drive System (RDS) and interfaces with vehicle management systems.
**Fig. 2** is a schematic block diagram of the RDS of Fig. 1 in a stand-by mode of operation.
**Fig. 3** is a schematic block diagram of the RDS of Fig. 1 in a retard mode of operation.
**Fig. 4** is a schematic block diagram of the RDS of Fig. 1 in a propulsion mode of operation.
**Fig. 5** is a schematic block diagram of the RDS of Fig. 1 in a dump mode of operation. 30
**Figs. 6 and 7** are graphs used to derive a measure of actual torque.
**Fig. 8** is a schematic block diagram of a low-level control.
**Figs. 9 - 26** are block flow diagrams for the states of **Fig. 8**.
**Fig. 27** shows a torque characteristic for a propulsion fuel saving mode of operation.

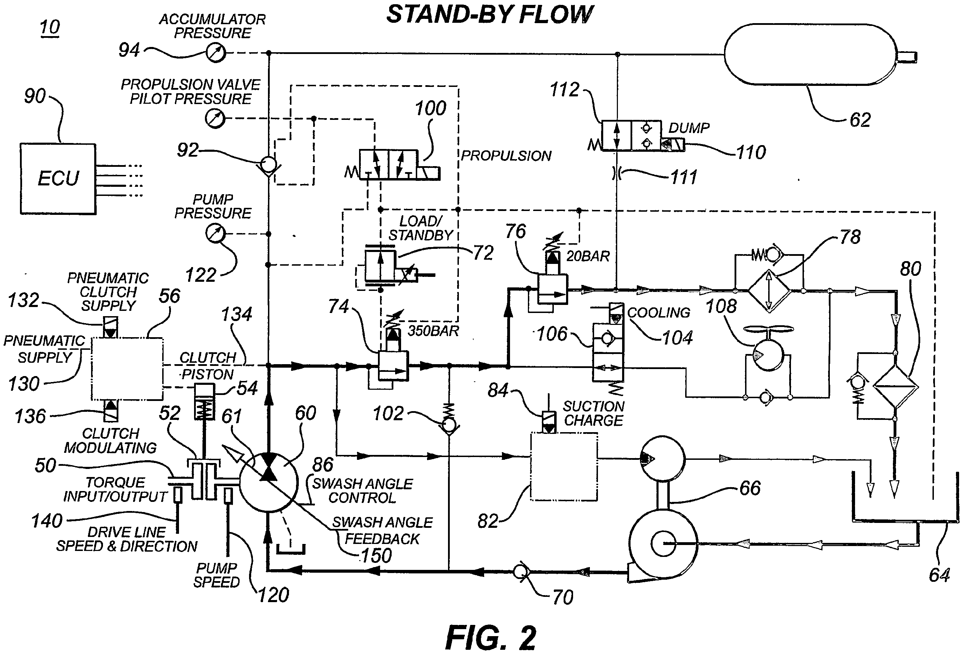

**Fig. 2**3 shows a torque characteristic for a propulsion boost mode of operation.

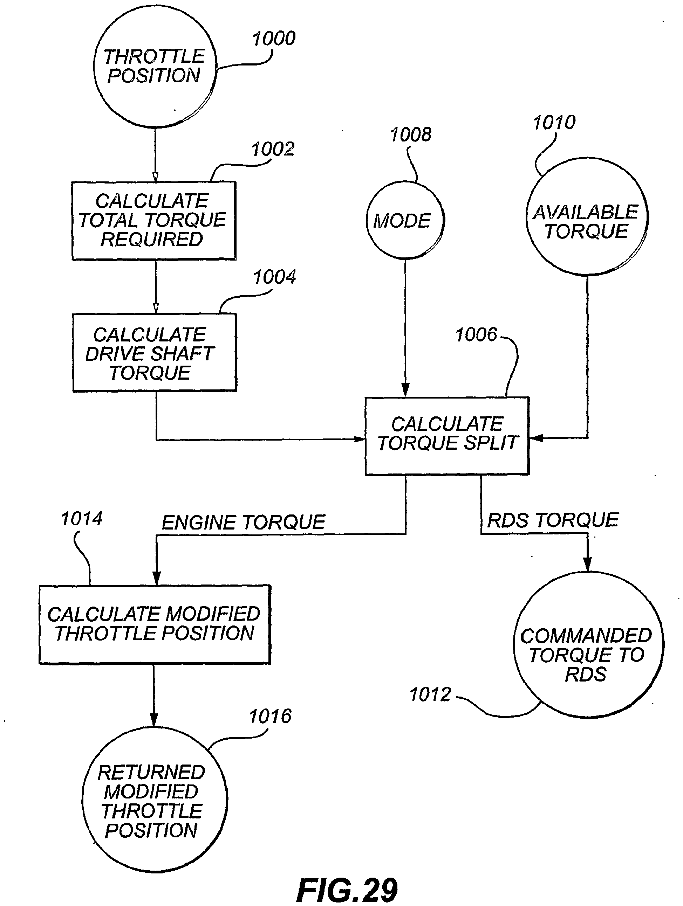

**Fig. 29** is a flow diagram showing how throttle position is modified.

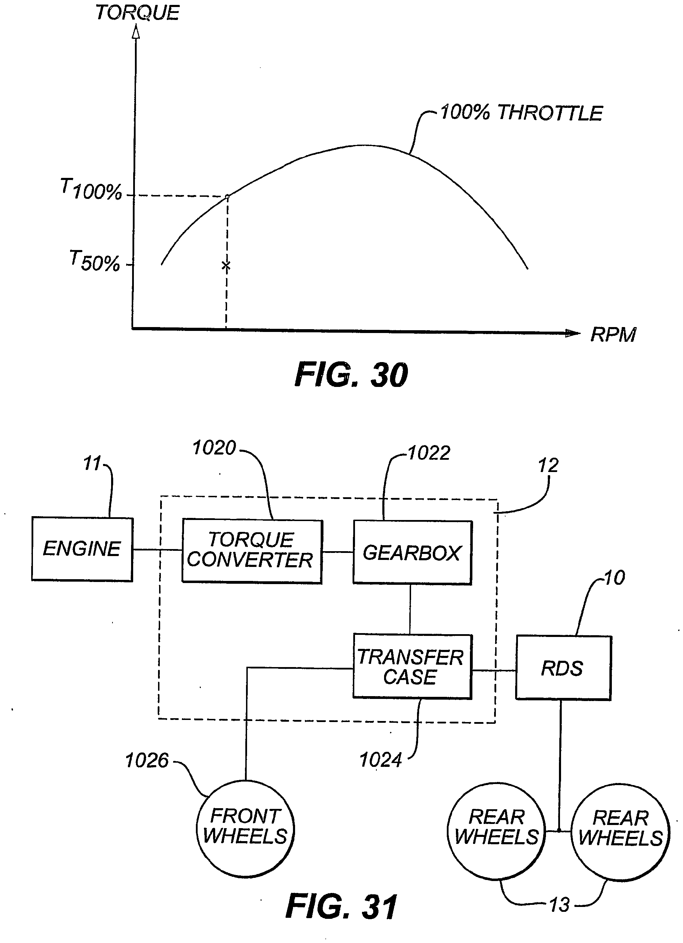

**Fig. 30** shows a typical engine torque/speed characteristic.
**Fig. 31** is a schematic block diagram of a vehicle drive train.

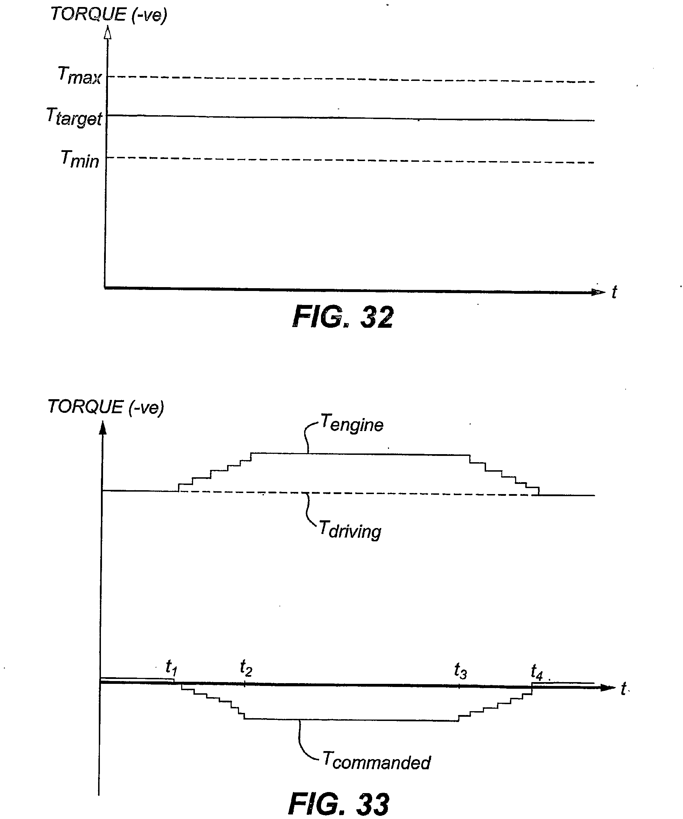

**Fig. 32** shows a torque characteristic for a retard fuel saving mode of operation.
**Fig. 33** shows a torque characteristic for a retard dash mode of operation.

### Detailed description

### Overview

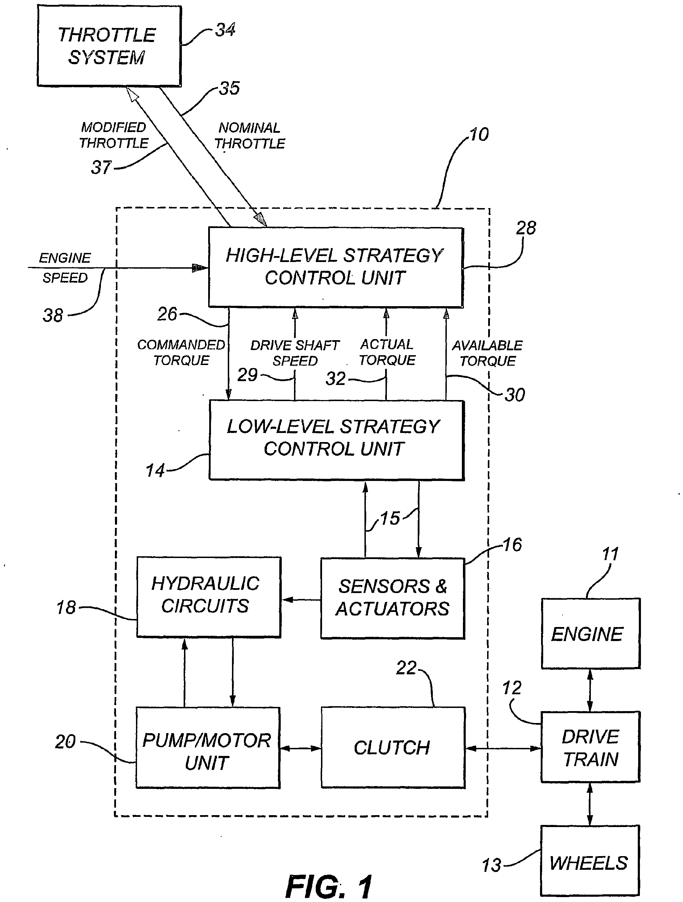

**Fig. 1** shows a schematic representation of a RDS **10** having connection with the drive train **12** of a vehicle. The drive train **12** also connects the vehicle's engine **11** with the vehicle's driving wheels **13**. The RDS **10** has a low-level strategy control unit **14**, embodied in a programmed microprocessor. The low-level strategy control unit **14** interfaces, by various b-directional signals **15** with various sensors and actuators **16** associated with a hydraulic circuit **18**, a pump motor unit **20** and a clutch **22.** The cooperative function of the low-level strategy control **14**, the hydraulic circuits **16** and the sensors and actuators **18** is to provide, in the most general sense, torque-controlled retard and propulsion modes of operation. In the 'Retard' mode, energy is drawn-off the drive train **12** by the pump/motor unit **20** to give a braking effect, and stored. In the 'Propulsion' mode, stored energy is imparted to the drive train **12** by the pump/motor unit **20** to supplement or replace vehicle engine motive force. Other modes/states of operation are also supported (as will be described), including 'Standby' and 'Disengaged' (i.e. unclutched).

The low-level control unit **14** is concerned with the control of retarding or propelling torque, and in that sense is provided with a time-variant torque value **26** ('commanded torque') provided by a high-level strategy control unit **28**. The high-level control unit **28** also receives drive shaft speed signal **29,** an 'available torque' signal **30**, and an 'actual torque' value **32** from the low-level strategy control unit **14**. The high-level control unit **28** also receives an engine speed signal **38**, and interfaces with the vehicle's throttle system **34**.

**Figs. 2 - 5** show details of the sensors and actuators **16,** the hydraulic circuits **18**, the pump/motor unit **20**, and the clutch **22**, with reference to various states of operation. The low- and high-level strategy control units 14, **28** are embodied in an Electronic Control Unit (ECU **90**, as will be described.

Beginning with **Fig. 2**, a torque input/input (take-off) point **50** (also referred to as the 'drive shaft') represents the drive train **12** of the vehicle shown in **Fig. 1****.** A mechanical clutch **52** is controlled by a clutch piston **54** and, in turn, by a clutch actuator **56**. The clutch **52** serves to connect a pump/motor unit **60** (i.e. **20** in **Fig. 1**) to the drive shaft **50.** A hydraulic fluid is circulated between an accumulator **62** and a reservoir **64** according to whether the pump/motor unit **60** is motoring to provide torque to the drive shaft **50**, or pumping under torque imparted by the drive shaft **50**. The specific hydraulic circuits and actuators will be described below with reference to the various modes of operation.

For the purposes of providing an example, consider a vehicle of 16,000 kg mass, a pump/motor unit of capacity 250 cc/rev, a 180 litre accumulator and maximum flow rate of 400 l/min.

The pump/motor unit **60**, in the preferred embodiment, is a variable displacement axial piston pump, and in the present example is a Bosch Rexroth model A4VS0. The controlling element of the pump/motor unit **60** is a swash plate **61** which is adjustable in terms of angular displacement to give varying degrees of pumping or motoring action. Negative swash plate angle (-15 to 0 degrees) represents retarding (pumping) operation, whereas positive swash plate angle (i.e. 0 to +15 degrees) represents propulsion (motoring) operation.

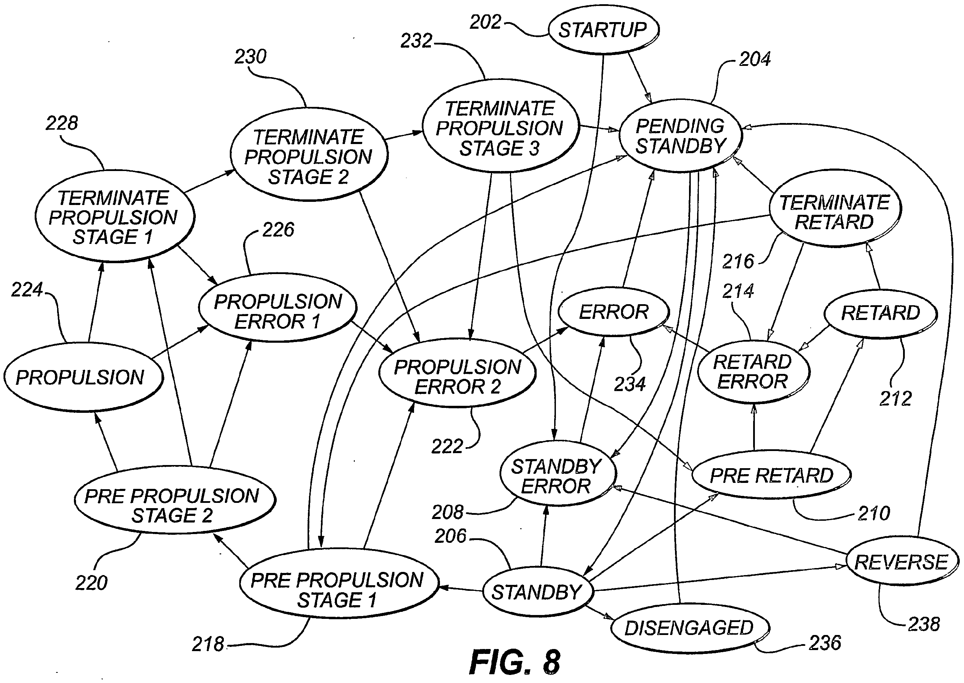

The specific hydraulic circuits arrangements of **Figs. 2 - 5** should be read in conjunction with the state diagram of **Fig. 8****.** The hydraulic circuits arrangements of **Figs. 2 - 5** represent steady state conditions, and in the terms of **Fig. 8** are the Standby state **206**, the Retard state **212** and the Propulsion state **224**. **Fig. 8** includes many other states additional to these 'stable' states, as will presently be described.

### Standby mode

Returning then to **Fig. 2**, which represents the hydraulic fluid flow in the Standby mode. In this mode of operation, the pump/motor unit **60** is maintained in a charged state in the sense that it is slightly retarding (i.e. pumping), and thus drawing energy from the drive shaft **50**. The purpose of the Standby mode is to ensure there is sufficient hydraulic pressure for the pump/motor unit **60** to permit control of the swash plate **61,** and secondarily to provide lubrication and cooling.

At a -2 degrees swash plate angle, the pump/motor unit **60** is acting to slightly retard the drive shaft **50**. The hydraulic fluid is drawn from reservoir **64** from a centrifugal pump assembly **66** passing a check valve **70** and then to the pump/motor unit **60.** The direction of flow is indicated by the closely-spaced arrowheads. The hydraulic flow rate is approximately 50 litres per minute. The fluid flow is enabled by a load/standby solenoid **72** acting on a relief valve **74**, such that when the load solenoid **72** is deactivated there is a 0 bar pressure drop across the relief valve **74**. A 20 bar valve **76** induces a pressure drop of that amount, after which the fluid passes a cooling circuit **78** and a filter circuits **80** before returning to the reservoir **64**.

The centrifugal pump unit **66** receives approximately 5 litres per minute of fluid and is self-latching by a hydraulic latching circuit **82** under control of a suction (air) charge solenoid 84. The function of the centrifugal pump unit **66** is to maintain suction pressure above a minimum specified value, e.g. 0.8 bar absolute for the example pump/motor unit.

The swash plate angle as set by an actuator **86**. The load/standby solenoid **72**, the suction (air) charge solenoid **84** and the swash angle control actuator 86 are all electrically connected to the ECU **90** which implements the low-level control strategy, in the sense of sequencing the various solenoids and actuators.

In summary then, the solenoid states for the Standby mode are:

| **Solenoid** | **State** |
|---|---|
| Standby solenoid (**72**) | De-energised (OFF) |
| Propulsion solenoid (**100**) | De-energised (OFF) |
| Dump solenoid (**110**) | Energised (ON) |
| Air charge solenoid (**84**) | Energised (ON) |

### Retard mode

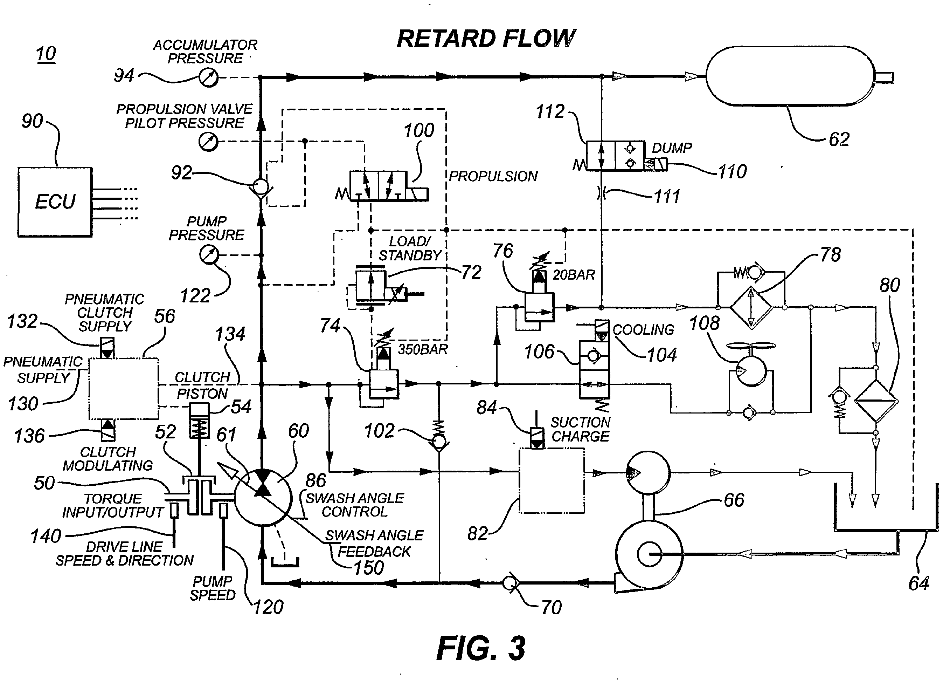

**Fig. 3** shows the Retard mode of operation. In this mode, the pump/motor unit **60** is pumping fluid from the reservoir **64** to the accumulator **62**, drawing kinetic energy off the drive shaft **50.** The swash plate **61** is set by the actuator **86** to the chosen angular setting (i.e. between - 2 and -15 degrees). The fluid flows from the reservoir **64** via the centrifugal pump unit **66** and the check valve **70** through the pump/motor unit **60**. The standby solenoid **72**, on this occasion, is energized such that the relief valve **74** presents a 350 bar pressure drop. The standby solenoid **72** remains in a state such that the relief valve **74** allows fluid flow with a 350 bar pressure drop, and that fluid flows via the standby valve **76**, through the cooler **78** and the filter **80**, returning to the reservoir **64**.

The main body of fluid proceeds from the pump/motor unit **60** through the check valve **92** and then accumulates in the accumulator **62**. This is because the check valve **92** presents only a 5 bar pressure drop, whereas the relief valve **74** presents a 350 bar pressure drop. For the swash plate **61** at a setting of -15 degrees, fluid flow of up to 400 litres per minute will be generated. Accumulator pressure is measured by a pressure sensor **94** and is used to control the swash angle actuator **86** to complete retarding operation when the accumulator **62** is full. If a situation is reached where the accumulator **62** is full and the retarding operation continues, then the fluid will prefer to flow via the relief valve 74, and the 350 bar pressure drop will result in heat being generated.

In summary then, the solenoid states for the Retard mode are:

| **Solenoid** | **State** |
|---|---|
| Standby solenoid (**72**) | Energised (ON) |
| Propulsion solenoid (**100**) | De-energised (OFF) |
| Dump solenoid (**110**) | Energised (ON) |
| Air charge solenoid (**84**) | Energised (ON) |

### Propulsion mode

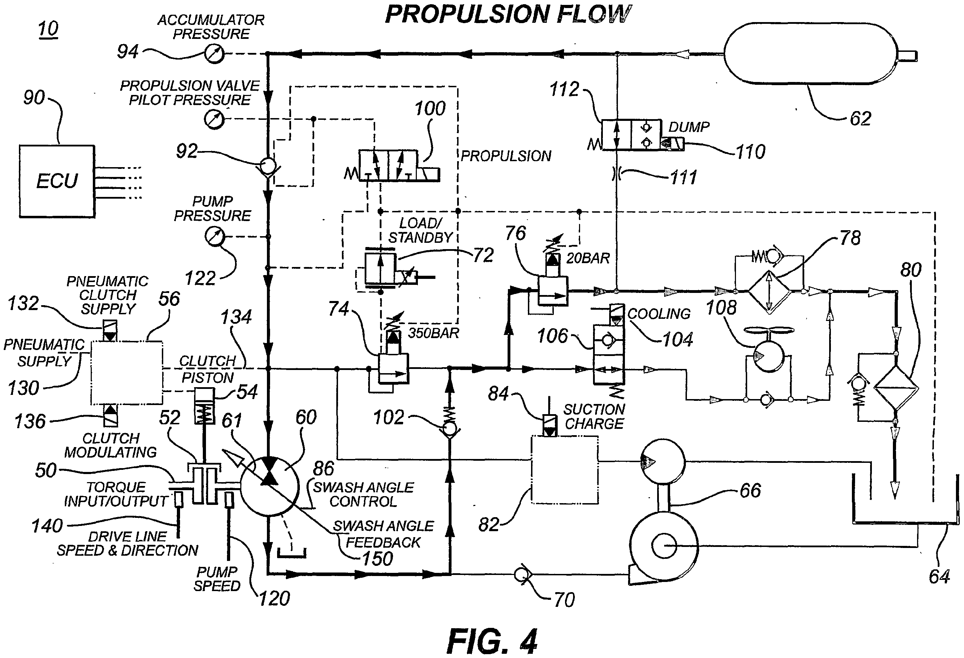

**Fig. 4** shows the Propulsion mode of operation, in which accumulated fluid under pressure is used to drive the pump/motor unit **60** to impart kinetic energy to the drive shaft **50**.

The propulsion solenoid **100** is energised to allow the fluid in the accumulator **62** to pass the check valve **92**. The swash angle control actuator **86** sets a swash plate **61** position in the range 0 to +15 degrees to control the rate of fluid being sourced from the accumulator **62** and thus control the torque applied to the drive shaft **50** by the pump/motor unit **60**. The fluid typically will have a flow rate of 400 litres per minute and is blocked by the check valve **70**, rather flowing through a further check valve **102** then the standby valve **76**, resulting in a 20 bar pressure drop and, again, passing via the cooling circuit **78** and the filter circuit **80** to the reservoir **64.** The standby solenoid **72** is in an energized state so that the relief valve **74** presents a 350 bar pressure drop, and is therefore blocking to the flow of fluid from the accumulator **62**.

A cooling solenoid **104** causes a valve **106** to open such that pilot fluid flow also proceeds to the coiling fans **108** associated with the cooling circuit **80**. The pilot flow typically is of the order of 12 litres per minute.

In summary then, the solenoid states for the Propulsion mode are:

| **Solenoid** | **State** |
|---|---|
| Standby solenoid (**72**) | Energised (ON) |
| Propulsion solenoid (**100**) | Energised (ON) |
| Dump solenoid (**110**) | Energised (ON) |
| Air charge solenoid (**84**) | Energised (ON) |

### Dump mode

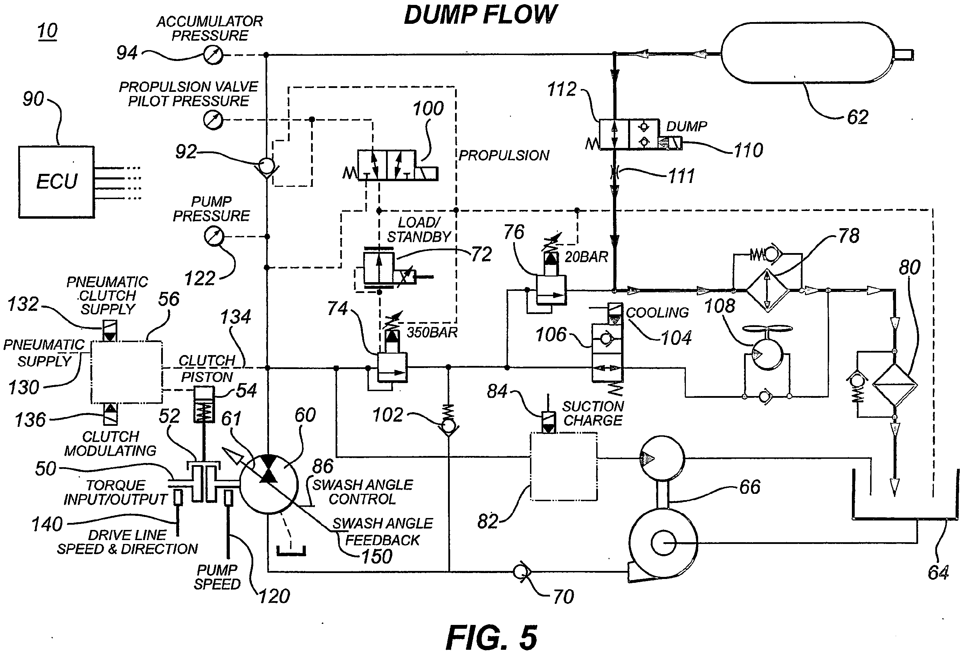

**Fig. 5** shows an arrangement where accumulated fluid in the accumulator **62** is required to be discharged. This may occur in situations where maintenance is required to be done and it would be dangerous to have a pressure of fluid present in the accumulator **62**. The path the fluid follows is achieved by a dump solenoid **110** being activated such that the associated valve **112** opens to allow the path of fluid which otherwise is blocked by the check valve **92**. The fluid passes through a controlling orifice **111** then via the cooling element **76** and the filter unit **78**, returning to the reservoir **64**.

### Determination of torque

As indicated in relation to **Fig.1****,** the high-level strategy control unit **28** determines a commanded torque value **26**. This torque value must be converted into a time-variant signal representing swash plate angle. For variable displacement axial piston pumps, torque is proportional to the working fluid pressure, swash plate displacement and hydromechanical efficiency. Displacement, in turn, is proportional to swash plate angle. The conversion between torque and angle (and vice versa) is achieved of a process of interpolation.

A data set is obtained by experimentation to determine, for a given class of pump/motor unit (and gearbox if applicable), the pressure and rotational speed values for given swash plate angles. A characteristic pump/motor unit will operate in conditions of between 0-350 bar at speeds between 0 - 2,200 rpm for swash plate angles of -15 degrees to +15 degrees. Conveniently, 35 bar increments, 200 rpm increments and 3 degree increments are adopted. The data set thus can be thought of as 11 'angle tables' (ie. -15, -12, ..., 0, +3, ...,+15 degrees), each having 11 pressure x 11 speed values.

The data sets thus require a measurement of pump/motor unit speed, which is provided to the ECU **90** by a pump/motor unit speed sensor **120**. The pump/motor unit pressure is determined from a pressure sensor **122**.

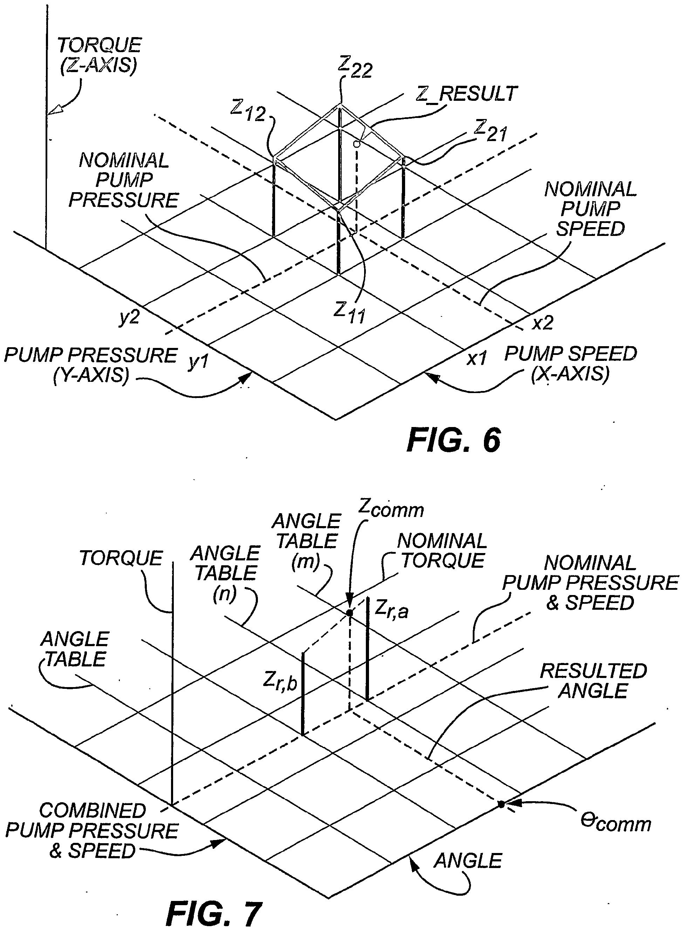

Consider now the conversion of torque (z) to angle (θ). For a commanded torque value (z_{comm}), the actual/nominal pressure and speed values are ascertained, and for each angle table the adjacent pressures (y₁, y₂) and speeds (x, x₂) are identified. As shown in **Fig. 6**, for a given angle table there will be a set of combinations (x₁, y₁), (x₁, y₂), (x₂, y₁), (X₂, y₂) nearest the nominal value (xₙₒₘ, yₙₒₘ) giving respective torque values of z₁₁, z₁₂, z_{21,} z₂₂. The process is to solve; for each angle table, for a torque value zᵣₑₛᵤₗₜ, being a linear interpolation between z₁₁, z₁₂, z₂₁, z₂₂. There will now be a set of torque values for each angle (e): z_{result,e}. Two such torque values will be nearest the commanded torque, z_{comm} in a ± sense (i.e. a 'just above' value and a 'just below' value), designated as z_{result, above} and Z_{result, below}.

A process of linear interpolation is performed, as shown in **Fig. 7**, between zᵣₑₛᵤₗₜ, above (for angle m) and z_{result,below} (for angle n) and z_{comm}, to derive a value of angle θ_{comm} lying between θₘ and θₙ. This is the swash plate angle provided to the swash angle control actuator **86**. Clearly swash plate angle (e) is a dynamic variable, responding to changes in commanded torque.

A swash angle feedback sensor **150** provides a feedback signal to the low-level control strategy unit **14** (embodied in the ECU **90**). The conversion from measured angle to delivered torque follows the reverse process. The thusly calculated delivered torque is supplied to the high-level control unit **28** as the value 'actual torque' **32**.

### Crutch operation

The clutch actuator 56 is shown only in general terms. An appropriate configuration is a pneumatic over hydraulic self-latching type. A pneumatic supply **130** is provided, under the control of a pneumatic clutch supply solenoid **132**. A pilot hydraulic line **134** is also shown, providing sufficient pressure in Standby mode to operate the clutch piston **54**. The clutching movement is controlled by a modulation solenoid **136**.

It is usual that clutch slip protection will be provided in the event that the pump/motor unit **60** seizes. This is achieved by the mechanical rating of the clutch plates **52** and the operating pressure applied by the modulation solenoid **136.**

A drive line speed and direction sensor **140** is also provided. The signal **29** derived from the sensor **140** is used in operation and protection schemes implemented by both the low-level and the high-level strategy control units **14**, **28**, as will be described.

### Low-level strategy control

Referring now to **Fig. 8****,** it can be seen that there are a number of discrete states with an overall strategy 200 governing operation of the RDU **10.** Each state represents a set of conditions that must be satisfied in order to pass safely to another state. The states can be thought of as rules designed to ensure safe and correct operation of the hydraulic circuits in particular. The Standby state **206**, the Retard state **212** and the Propulsion state **224** have already been generally described with reference to **Figs. 2 - 4**. The Dump mode is not shown in the state diagram. The remaining states (except the Disengaged state 236 and the Reverse state **238)** can be thought of as transitions.

### Start-up state

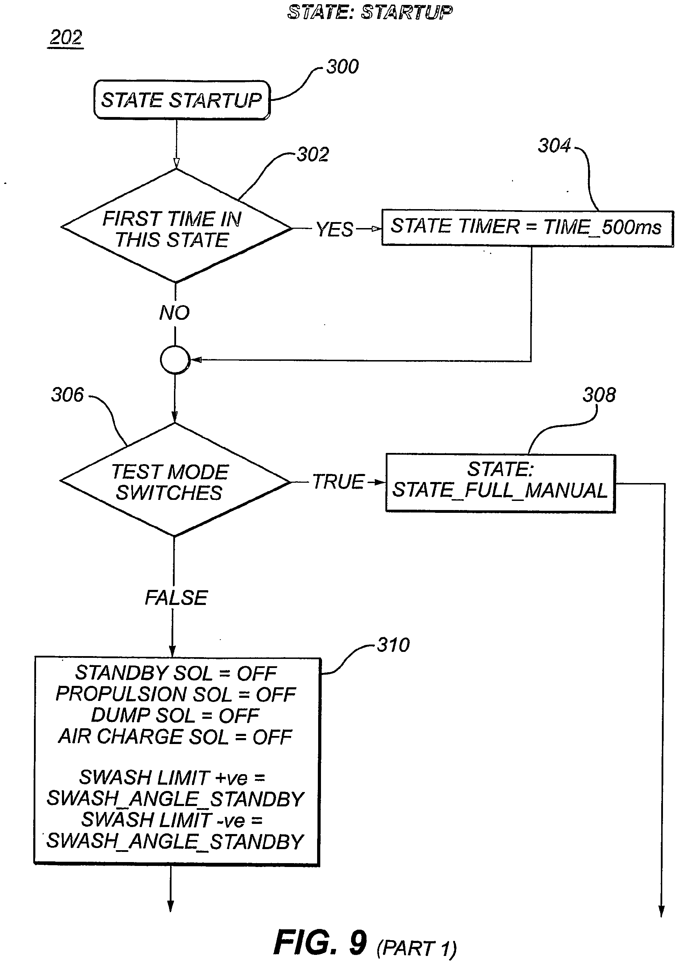

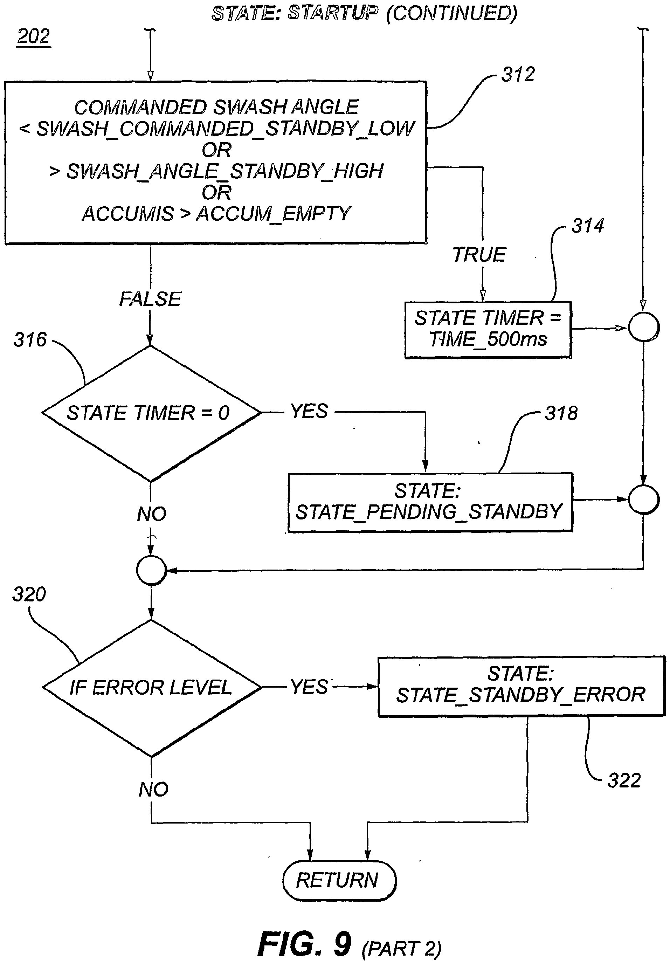

Referring then to **Fig. 9**, the start-up state occurs when the ECU **90** is first powered up (step **300**), waiting for a period of 500 ms (steps **302**, **304**). The process determines whether a test mode (i.e. Full Manual) should be entered (steps **306, 308**), and if not then the process turns all of the solenoids **72, 84, 100, 110** off, and drives the swash plate **61** to the standby angular position (step **310**). The process then waits for an indefinite period for the commanded angle to be set to the standby position and for the accumulator to be empty (i.e. less than 20 bar) (steps **312, 314**). Once this has occurred, the process waits for the state timer to decrement to 0 (step **316**) before proceeding to the Pending Standby state **204** (step **318**). Any error condition will cause entry of the Standby Error state **208** (steps **320**, **322**).

### Pending Standby state

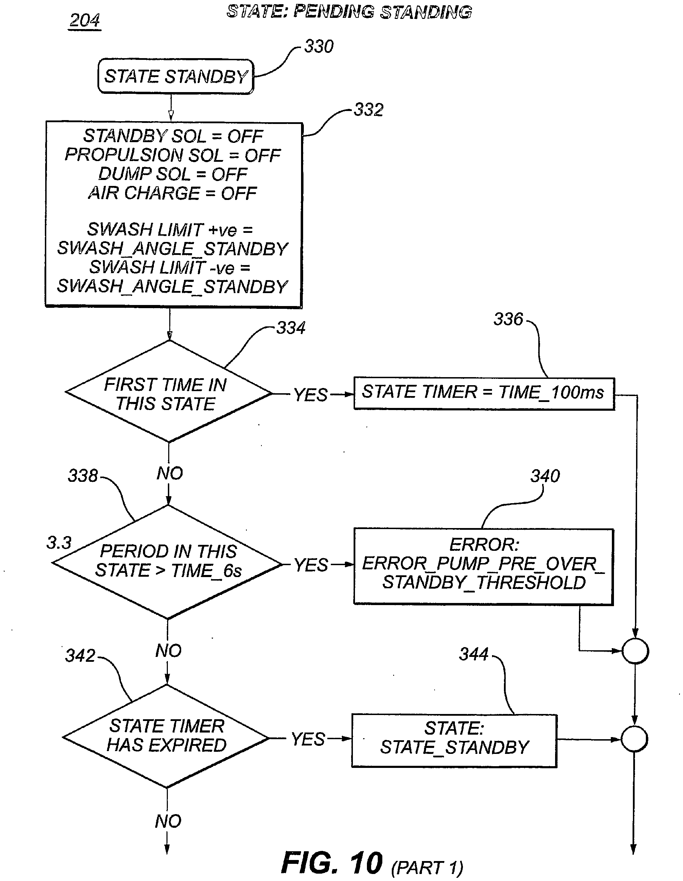

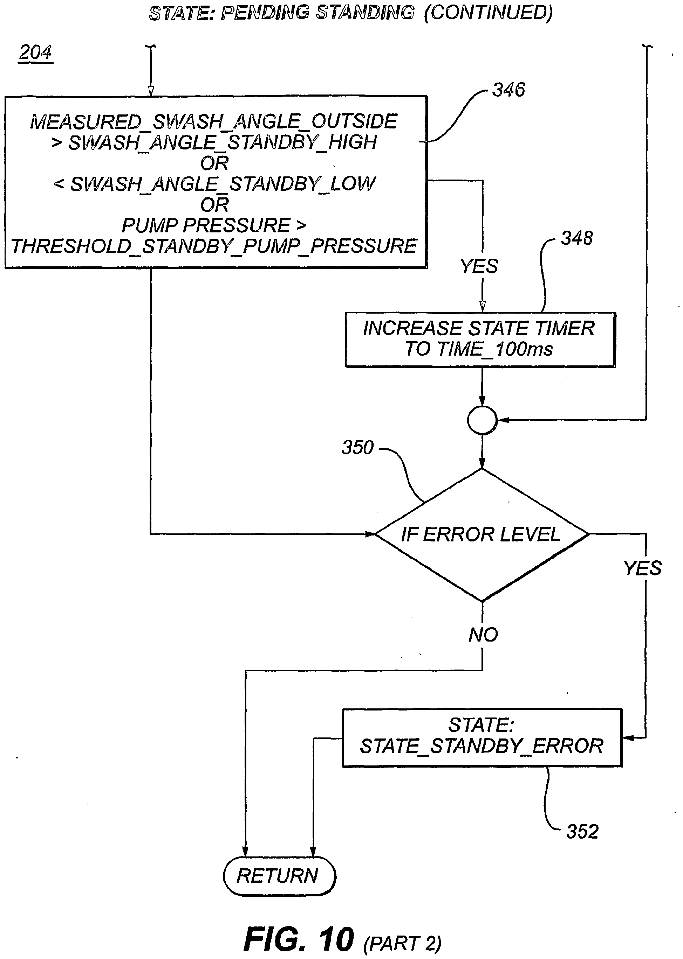

Referring then to Fig. **10**, on entering the Pending Standby state **204** (step **330**), the solenoids **72**, **84**, **100**, **110** are set to standby conditions as mentioned above (step **332**) causing the pump/motor unit **60** to unload, if necessary. The swash plate **61** is commanded to the standby position (step **332** also). A minimum state timer is set to 100 ms (steps **334**, **336**). Up to 6 seconds is allowed for the swash plate **61** to move into the standby angular window and for the pump to unload to less than 45 bar (i.e. the standby pressure) (steps **338**, **346**). Once this has occurred and the state timer has expired (step **342**), the flow progresses to the Standby state (step **344**). If swash plate **61** has not moved into the standby window within 6 seconds, or the pump/motor unit pressure remains high, the process flags a condition of 'pump pressure over standby threshold' (step **340**). This leads to the Standby Error state **208** (steps **350**, **352**).

### Standby state

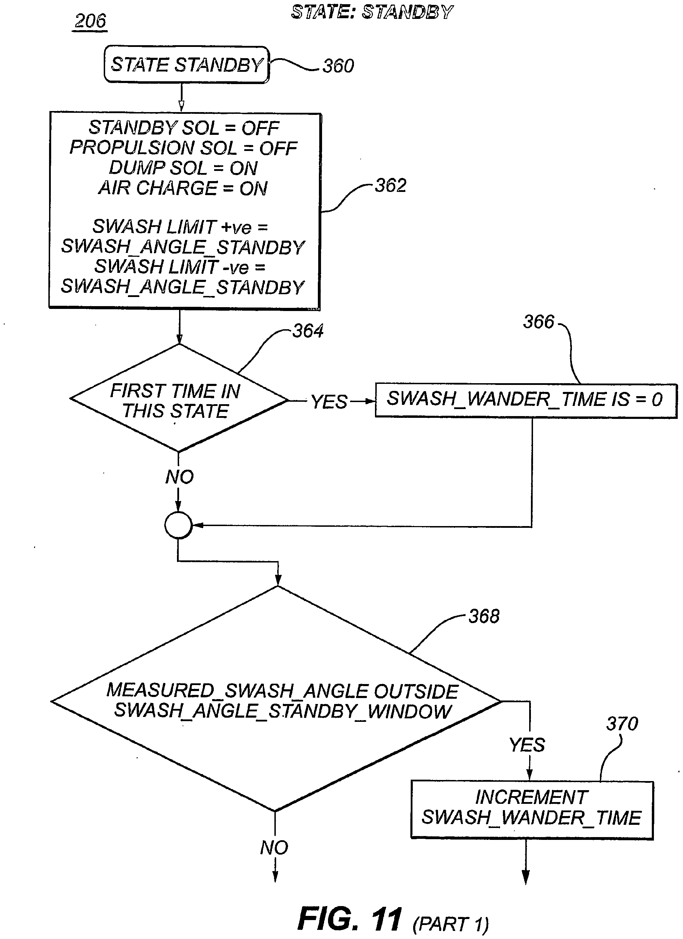

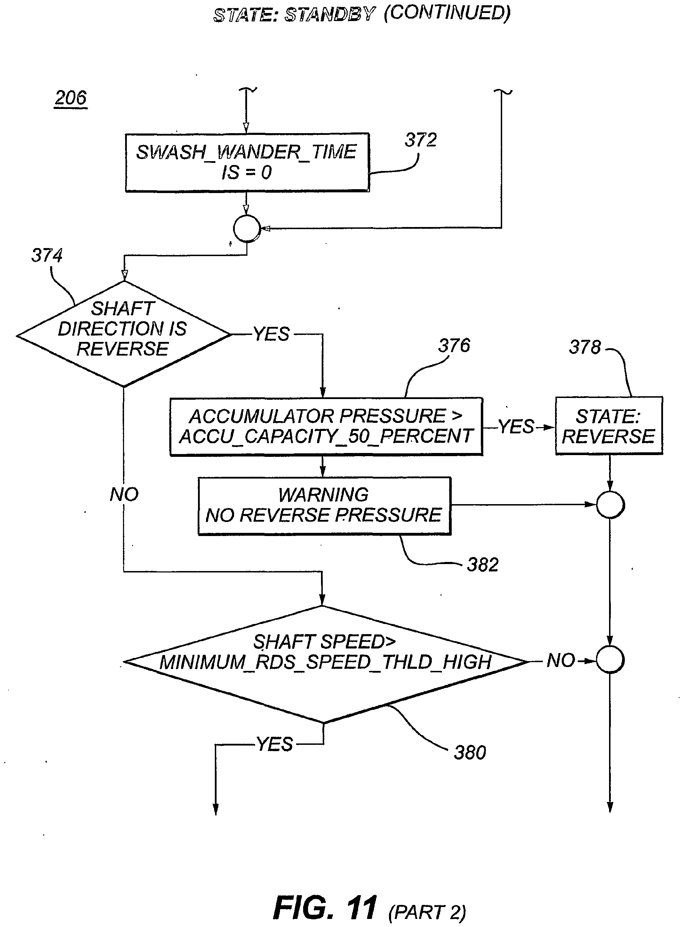

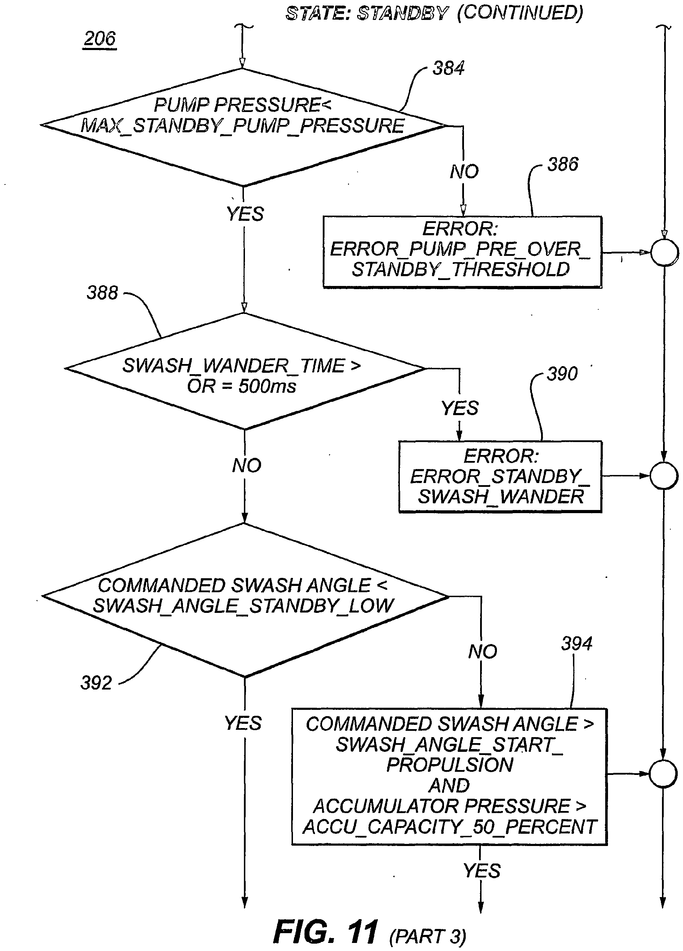

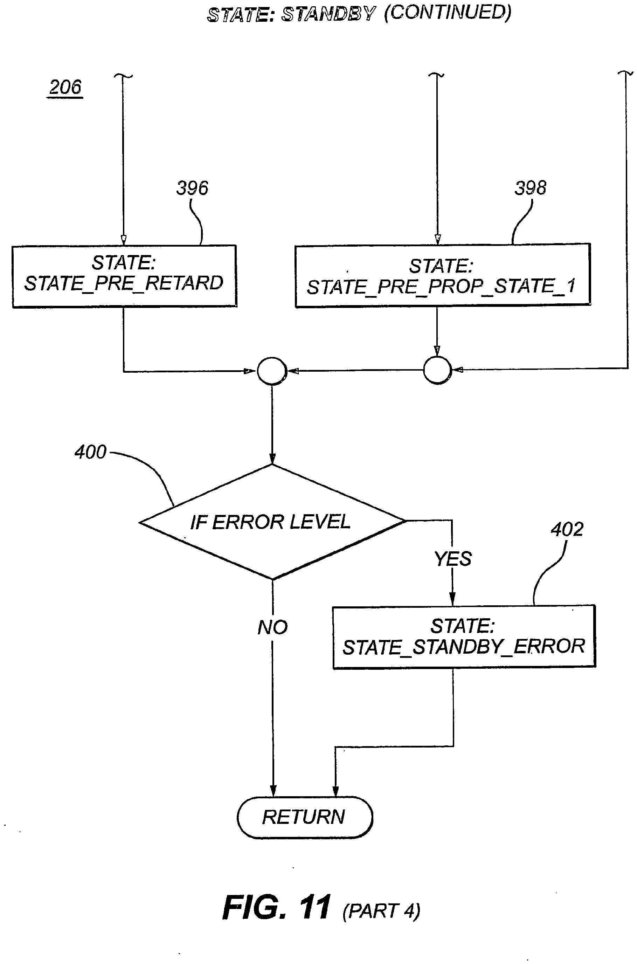

Referring then to **Fig. 11**, on entering the Standby state **206** (step **360**), the solenoids **72**, **84**,**100**,**110** are set to the standby conditions (step **362**). The process then checks the positional stability of the swash plate 61 by measuring the time that it may be outside the swash angle window (steps **364**, **366**, **368**). If not stable, then an error occurs (steps **388**, **390**). Once the swash plate is stabilised, the process checks the direction of rotation of the drive shaft **50** by the sensor **140**. If a "reverse" condition is detected, and the accumulator pressure is at 50% capacity, the process proceeds to the Reverse state **238** (steps **374**, **376**, **378**). Otherwise, if the shaft direction is forward, the process then checks if the shaft's speed is greater than a minimum high speed threshold (step **380**), and if the pump/motor unit pressure is less than a maximum standby pump pressure (i.e. 45 bar) (step **384**). If yes, then the process proceeds to check the commanded swash plate position (step **392**). If the position is less than a Standby low-level (step **392**), then the process leads to the Pre-Retard state **210**. If the commanded position of the swash plate **61** is in a Start Propulsion condition, and the accumulator as at 50% capacity (step **394**), then the process leads to the Pre-Propulsion Stage 1 state **218** (step **398**). Any errors lead to the Standby Error state **208** (steps **400**, **402**). There is additionally a transition to the Disengaged state **236** that is not specifically shown in **Fig.11**. If no commanded torque value above or below the standby value arises within a predetermined period of time, then the pump/motor unit **60** should be disengaged from the drive train **12** by the operation of the clutch **22**.

### Standby Error state

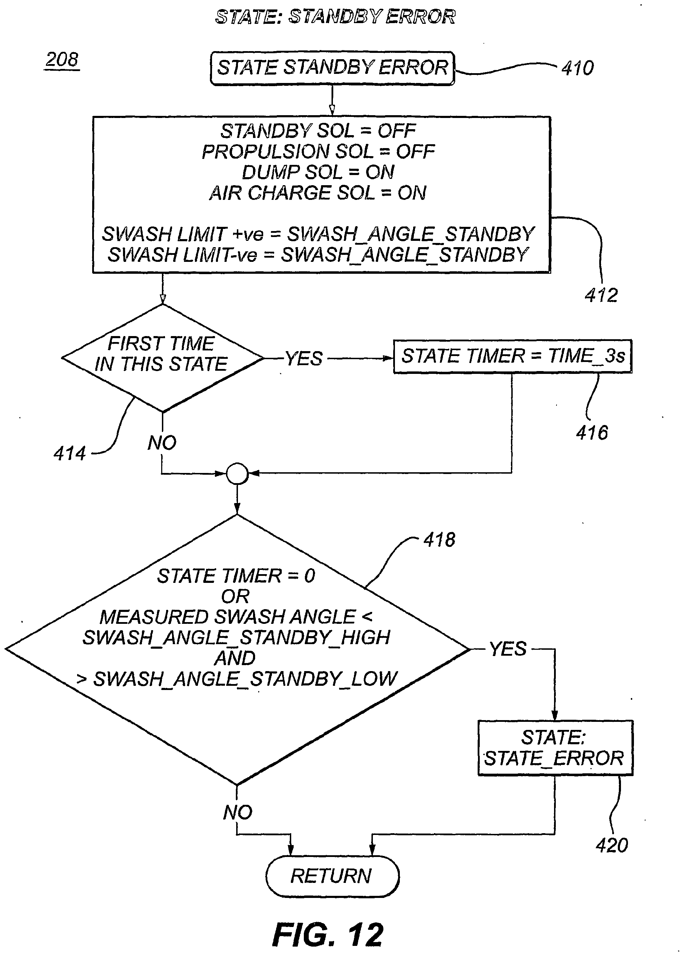

Referring now to **Fig.12**, on entering the Standby Error state **208** (step **410**), the solenoids **72**, **84**, **100**, **110** are set to standby conditions (step **412**). The swash plate solenoid **86** is commanded to the standby position (step **412** also). A minimum state timer is set to three seconds, meaning that up to three seconds are allowed for the swash plate **61** to move into the standby window (steps **414**, **416**). Once this has occurred, or if three seconds expires (step **418**), there is an unconditioned transition to the Error state **234** (step **420**).

### Pre-Retard state

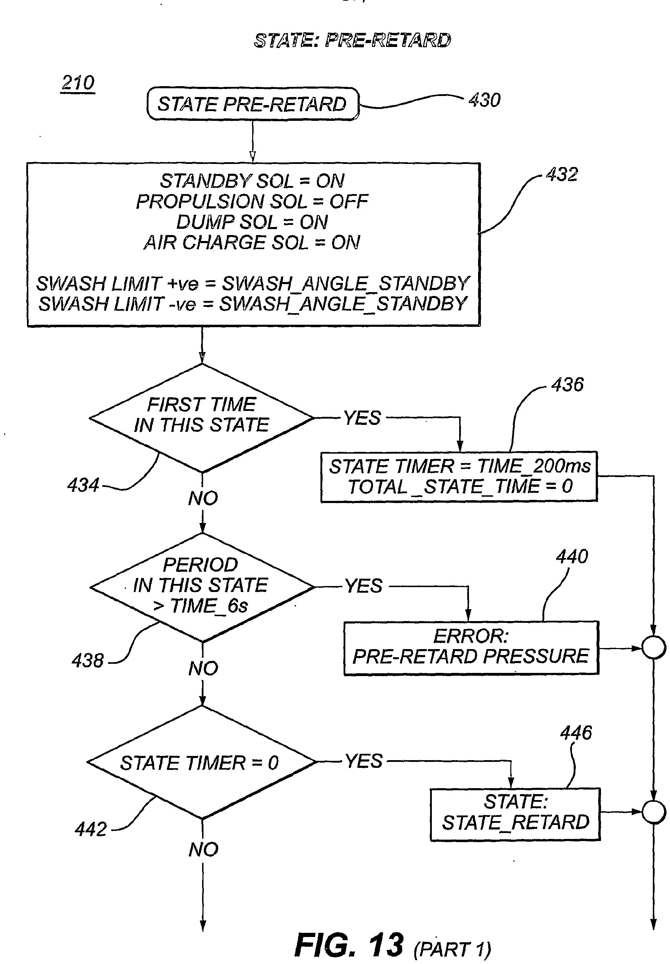

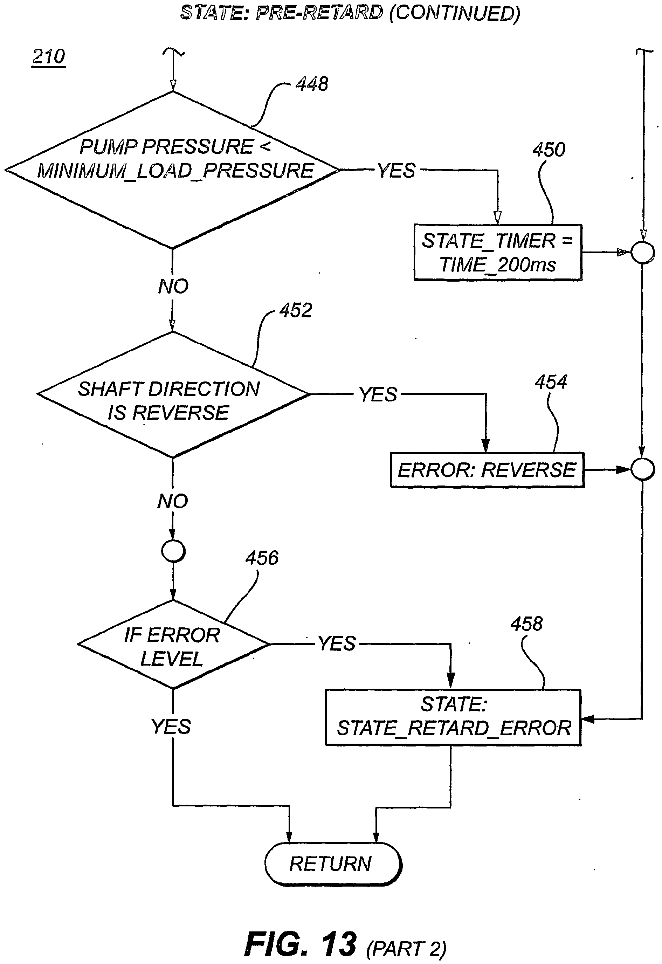

Referring now to **Fig. 13**, when the Pre-retard state **210** is entered (step **430**), the standby solenoid **72** is switched on, as are the dump and air charge solenoids **84**, **100**, **110**. This allows the pump/motor unit **60** to load, if not already loaded. The swash plate solenoid **86** is commanded to the standby position (step **432** also). A minimum state timer is set to 200 ms (steps **434**, **436**). Up to six seconds are allowed for the pump/motor unit **60** to load (steps **438**, **448**), or a pre-retard pressure error flag is raised (step **440**), and the process proceeds to the Retard Error state **214** (step **458**). If the pump loads within six seconds (step **442**), the process proceeds to the Retard state **212** (step **446**). If the drive shaft is rotating in the reverse direction (step **452**), the process raises an error flag (step **454**) and proceeds to the Retard Error state **214** (step **458**).

### Retard state

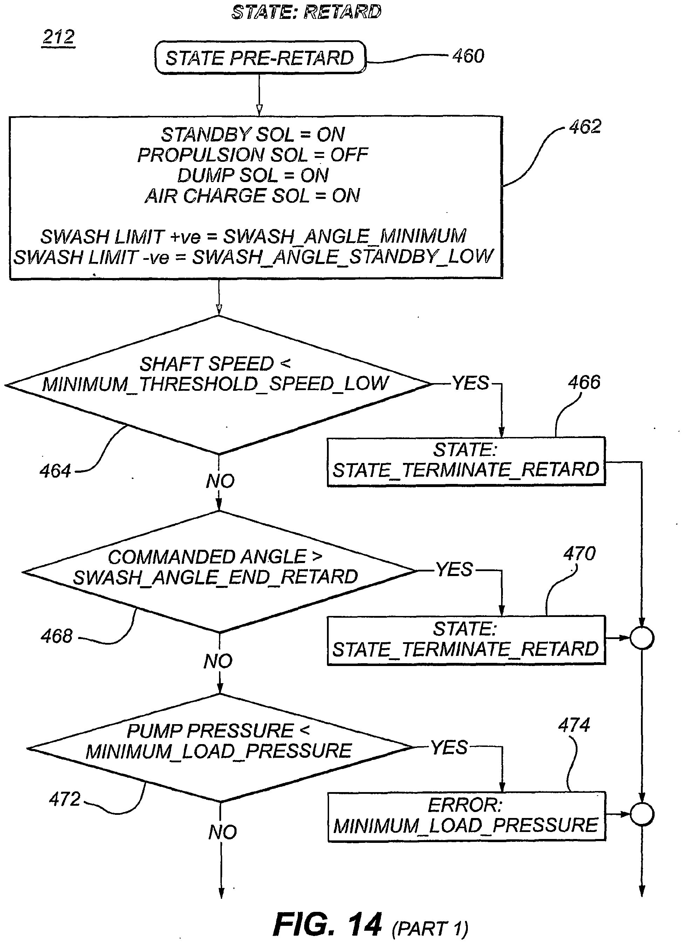

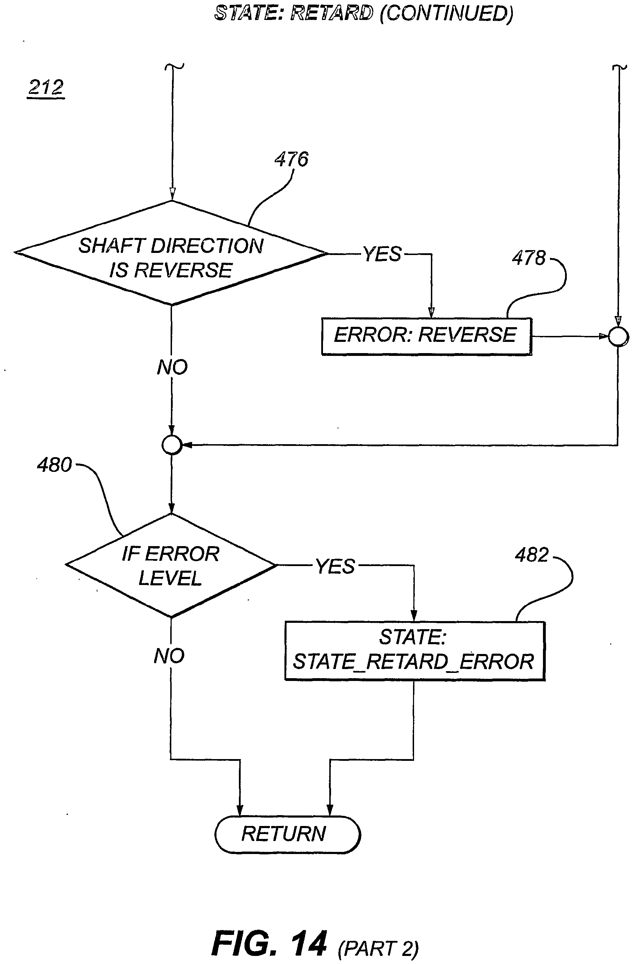

Referring now to **Fig.14**, when the Retard state **212** is entered (step **460**), the solenoids **72**, **84**, **100**, **110** are set to loaded conditions (step **462**). The swash solenoid 86 moves the swash plate **61** to the calculated commanded retard angle (step **462** also). A continuous check is made of the drive shaft speed to determine that it is above a minimum threshold speed (step **464**), and also to determine that the command has not returned to "standby" (step **463**). If either conditions are true, then the process proceeds to the Terminate Retard state **216** (steps **466**, **470**). The pump/motor unit pressure is also continually checked (step **472**), and any low pressure will cause a minimum low pressure error flag to be raised (step **474**), and the process proceeds to the Retard Error state **214** (steps **480**, **482**). If the drive shaft is rotating in the reverse direction, then a reverse error is flagged, and the process to proceed to the Retard Error state **214** (step **482**).

### Retard Error state

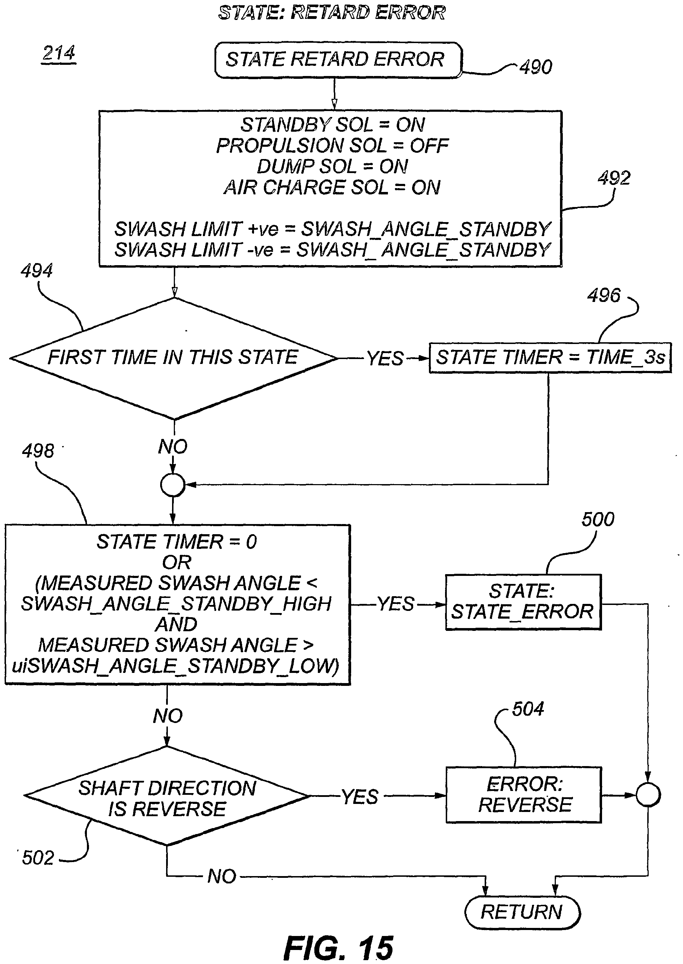

Referring now to **Fig. 15**, on entering the Retard Error state **214** (step **490**), the solenoids **72**, **84**, **100**, **110** are set to the loaded conditions, meaning that the standby solenoid **72** is activated. The swash plate **61** is limited to standby angle conditions (step **490** also). A minimum state timer is set to three seconds, giving up to three seconds for the swash plate to move in to the standby window (steps **494**, **496**, **498**). Once this has occurred, or the three second period expires, the process unconditionally proceeds to the Error state **214** (step **500**). If the shaft is rotating in the reverse direction, then the process raises a reverse error flag (step **504**).

### Terminate Retard state

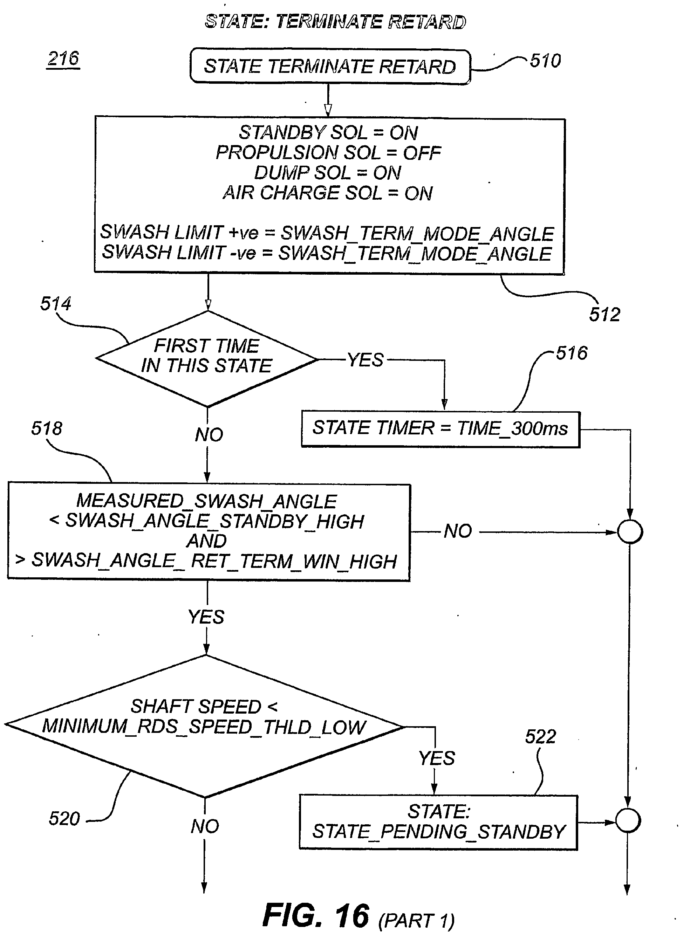

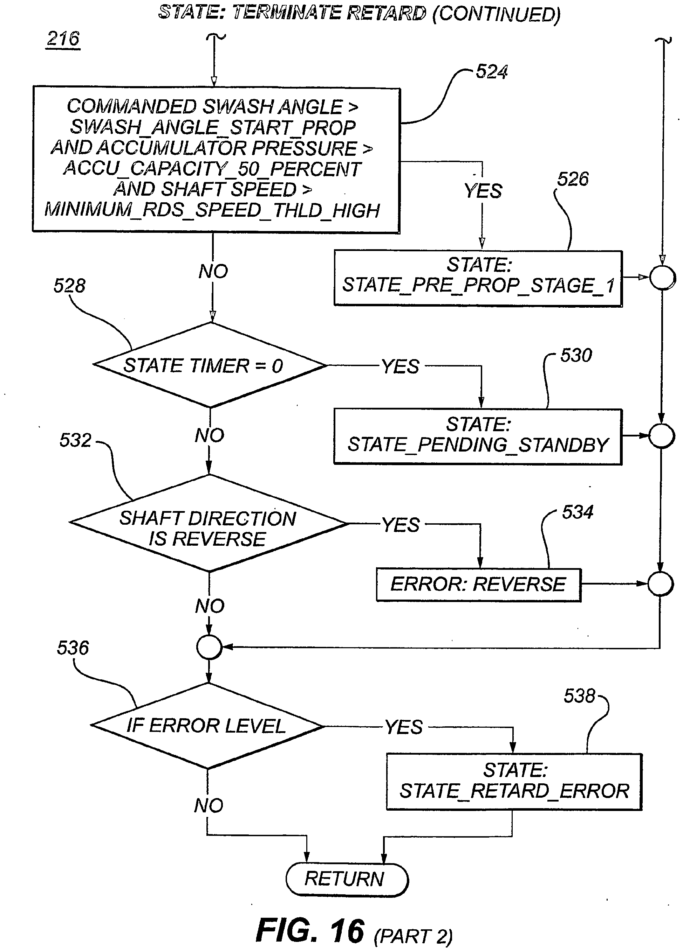

Referring now to **Fig. 16**, on entering the Terminate Retard state **216** (step **510**), the solenoids **72**, **84**, **100**, **110** are set such that, in particular, the propulsion solenoid **100** is deactivated. With the pump/motor unit **60** still loaded, the swash plate **61** is commanded to the min/max swash terminate mode angle (step **512**). A state timer is set to 300 ms (steps **514**, **516**), and therefore waits until the swash plate **61** moves into the window (step **518**) before deciding if the high-level command has moved directly to propulsion. If not, or if the drive shaft speed has dropped below a minimum speed threshold (step **520**), then the process proceeds to the Pending Standby state **204** (steps **522**, **530**). If, on the other hand, the drive shaft speed is above the minimum threshold, the command has changed to propulsion, the shaft is rotating in the forward direction and there is more than 50% accumulator capacity (step **524**), then the process moves to the Pre-propulsion Stage 1 state **218** (step **526**). Any errors if detected result in progress to the Retard Error state **214** (steps **532**, **534**, **536**, **538**).

### Pre-Propulsion Stage 1 state

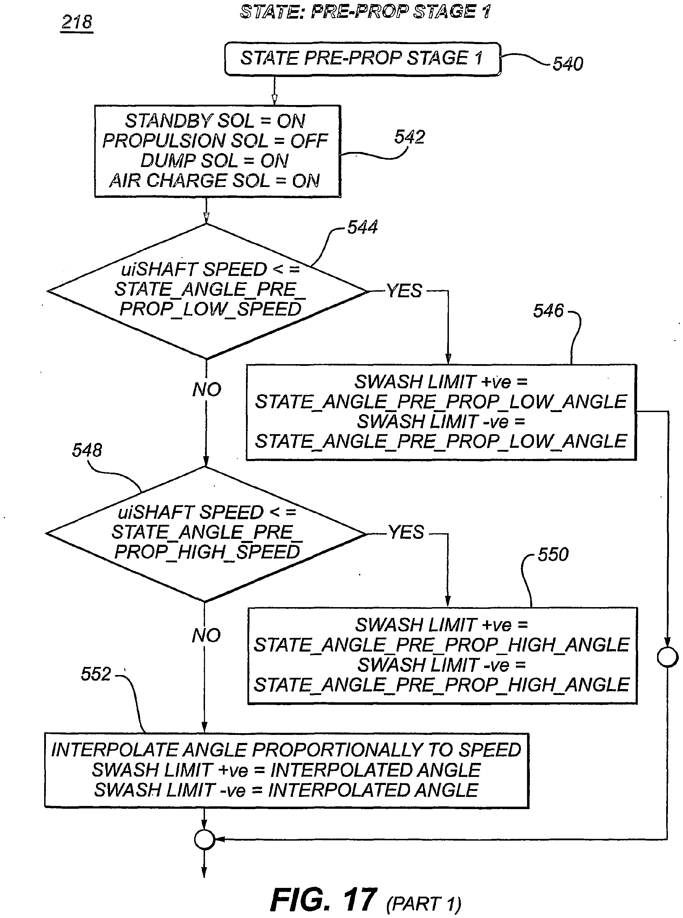

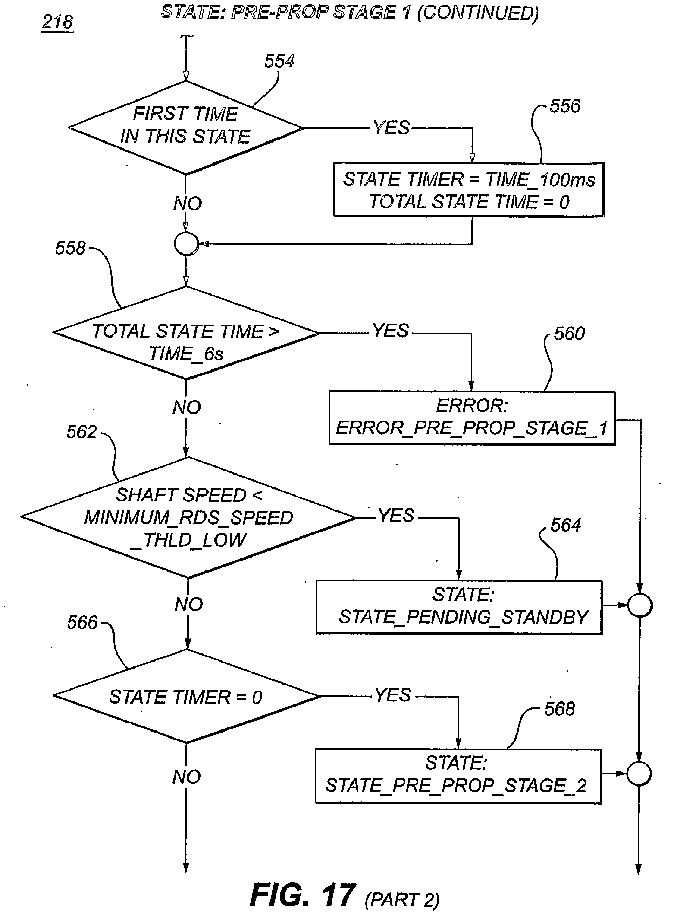

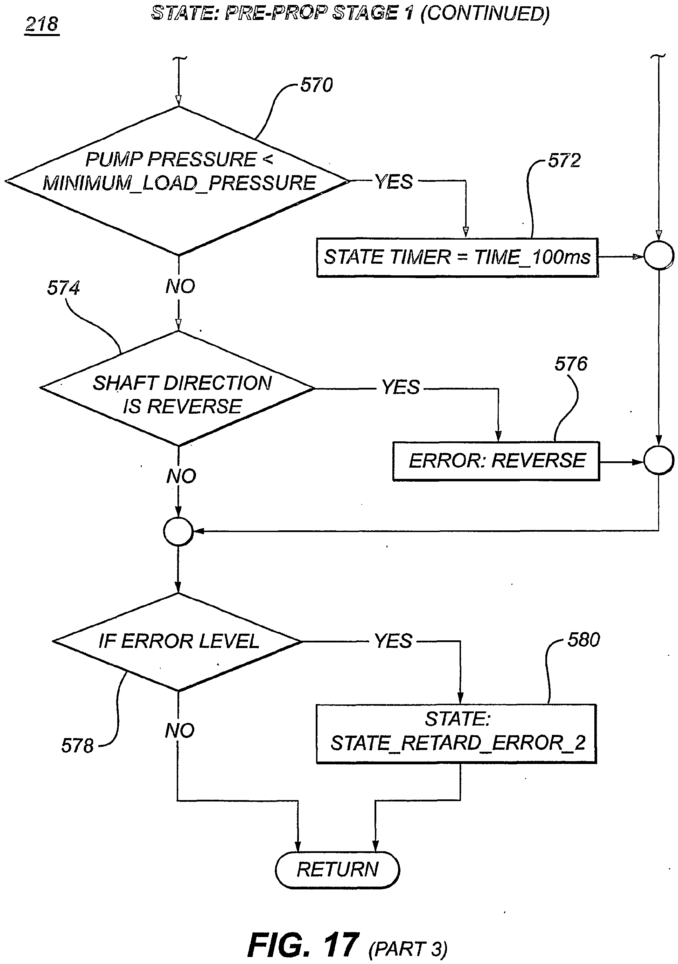

Referring now to **Fig. 17**, on entering the Pre-Propulsion Stage 1 state **218** (step **540**), the solenoids **72**, **84**, **100**, **110** are set to loaded conditions, causing the pump/motor unit **60** to load, if not already so (step **542**). The swash plate is commanded to an angle relative to the shaft speed (step **552**) as previously described with reference to **Figs. 6** and **7**). The process ensures that the minimum load pressure is achieved even at very low speeds (steps **544**, **546**, **548**, **550**). If it is the first time in the state, the state timer is set to 100 ms (steps **554**, **556**). Up to six seconds is allowed for the recovery according to the following checks: speed higher than threshold speed (step **562**); and the pump is loaded (step **570**). If these checks are satisfied, then the process proceeds to Pre-propulsion Stage 2 state **220** (step **568**). If not, then the process proceeds to the Propulsion Error 2 state **222** (steps **578**, **580**). If the drive shaft is rotating in the reverse direction, then the process flags an error (steps **574**, **576**). If the shaft speed is less than the threshold value, the process proceeds to the Pending Standby state **204** (steps **562**, **564**).

### Pre-Propulsion Stage 2 state

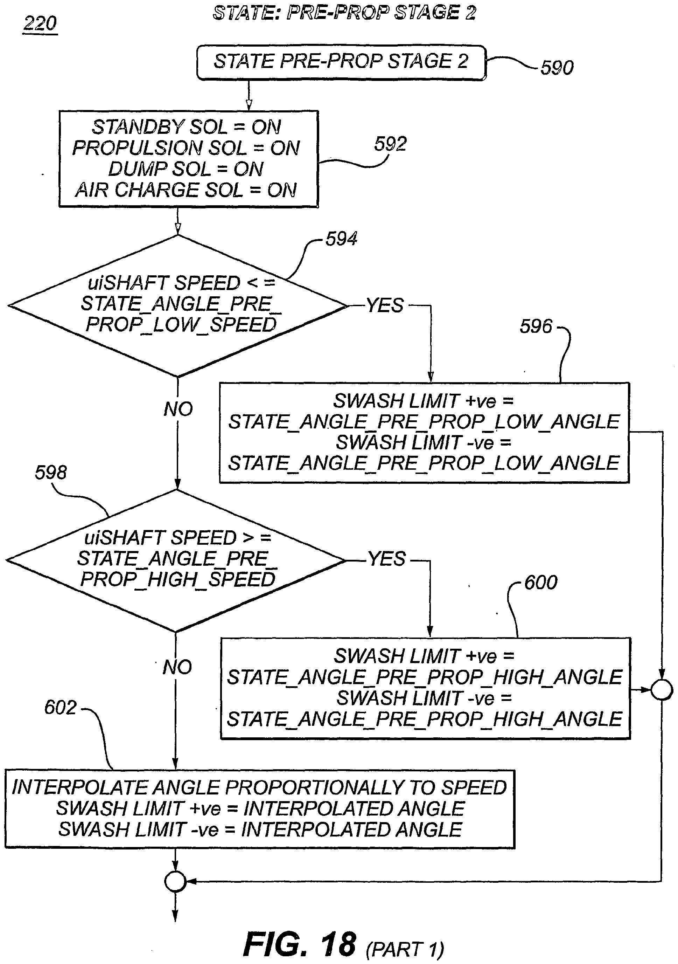

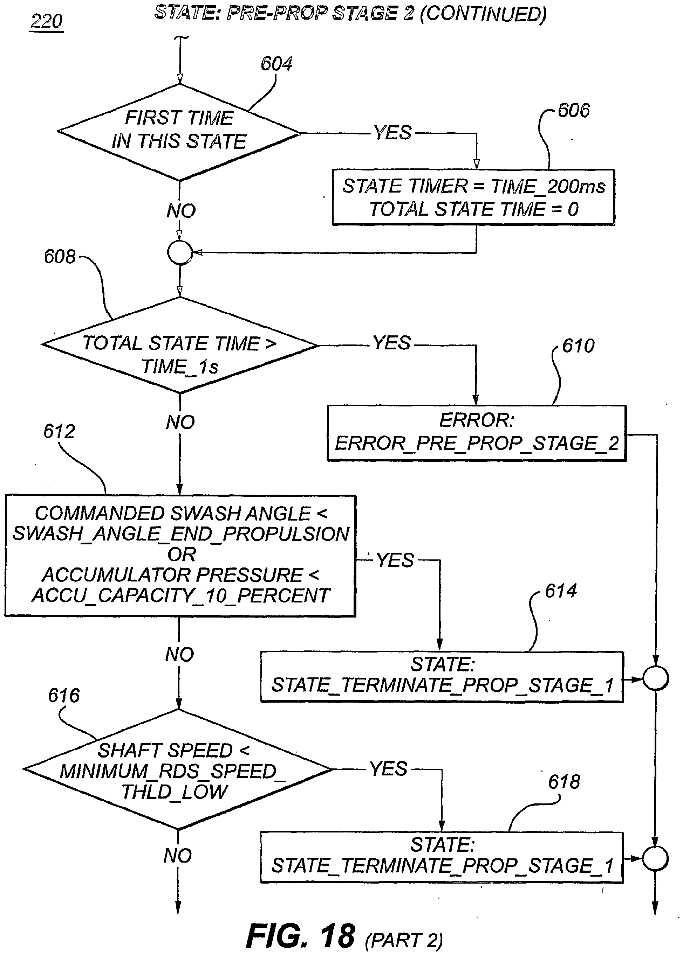

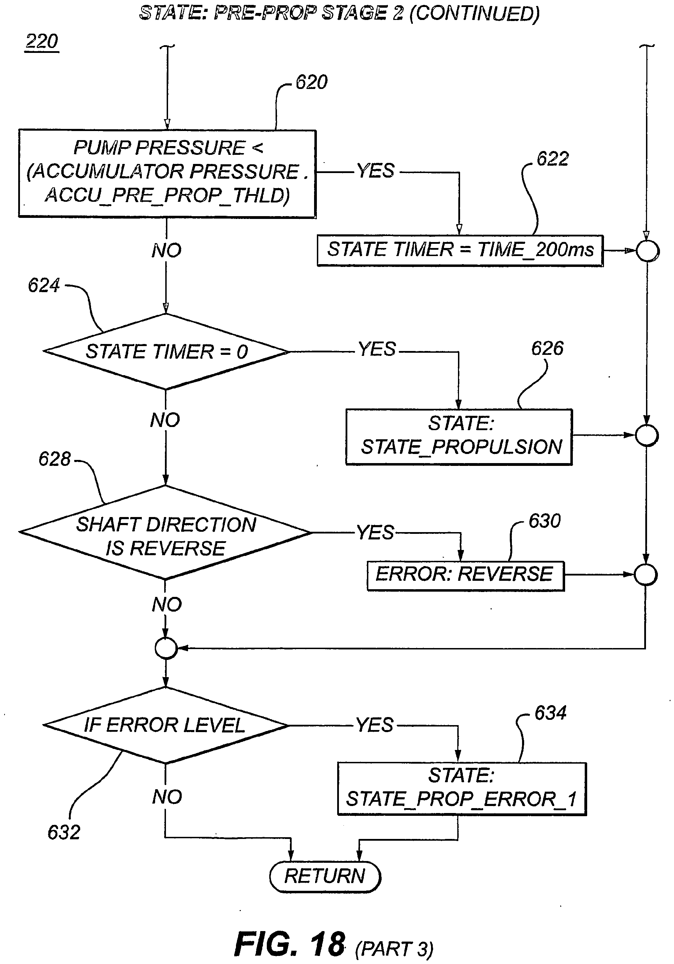

Referring then to **Fig. 18**, on entry into the Pre-Propulsion Stage 2 state **220** (step **590**), all of the solenoids **72**, **84**, **100**, **110** are switched on. The swash plate **61** is commanded to an angle relative to the drive shaft speed (step **602**). The process ensures that the minimum load pressure is achieved even at very low drive shaft speeds (steps **594**, **596**, **598**, **600**). If it is the first time in this state, then a state timer is set to 200 ms (steps **604**, **606**). Up to one second (step **608**) is allowed for the recovery according to the following checks: commanded angle remains above standby (step **612**), drive shaft speed is higher than a threshold speed (step **616**), accumulator capacity is higher than 10% (step **612**), the pump/motor unit is still loaded (step **620**), and the shaft is rotating in the forward direction (step **628**). If all of these checks are satisfied, then the process proceeds to the Propulsion state **224** (step **626**). Otherwise, the process proceeds Propulsion Error 1 state **226** (steps **614**, **632**, **634**).

### Propulsion Error 2 state

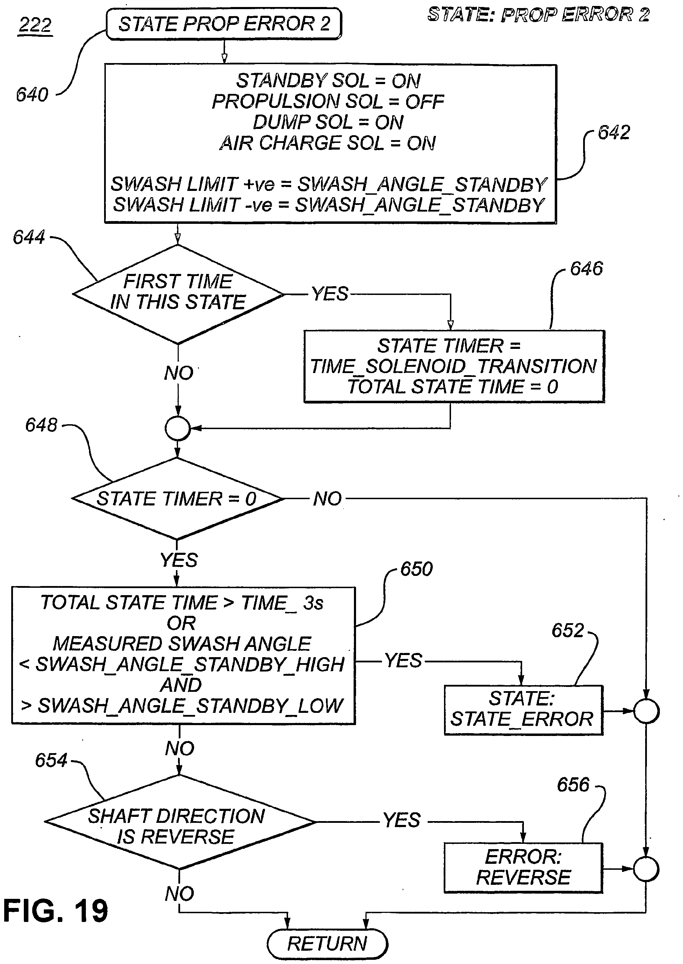

Referring then to **Fig. 19**, on entering the Propulsion Error 2 state **222** (step **640**), the solenoids **72**, **84**, **100**, **110** are set to loaded conditions and the swash plate **61** is commanded to the standby position (step **642**). A minimum state timer is set to three seconds, thus allowing up to three seconds for the measured swash plate angle to move into the standby window (steps **644**, **646**, **648**, **650**). Once this has occurred, or the time has expired, the process proceeds unconditionally to the Error state **234** (step **652**). If the drive shaft is rotating in the reverse direction, then a reverse error is flagged (steps **654**, **656**).

### Propulsion state

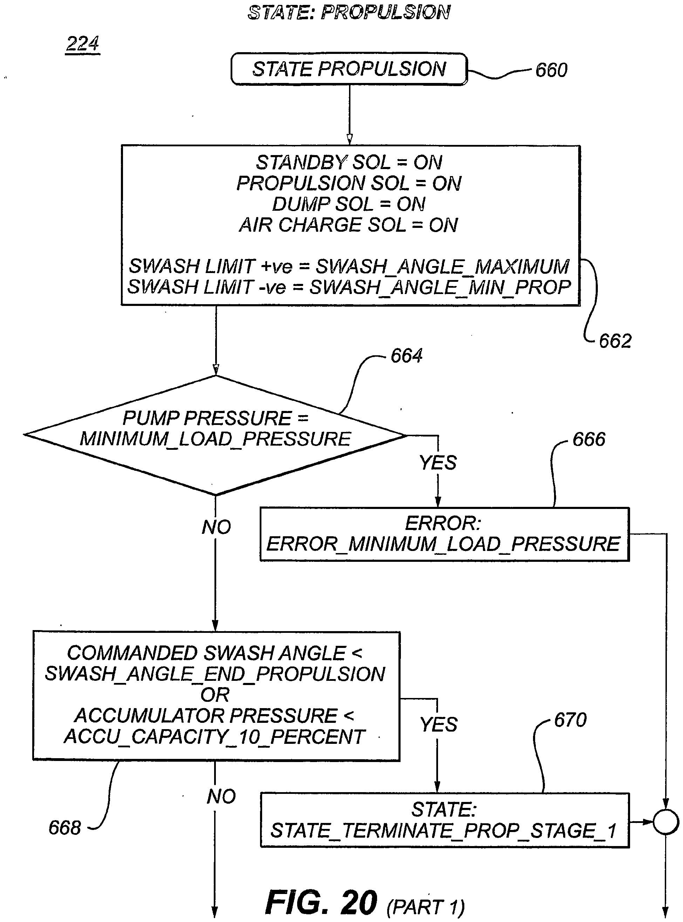

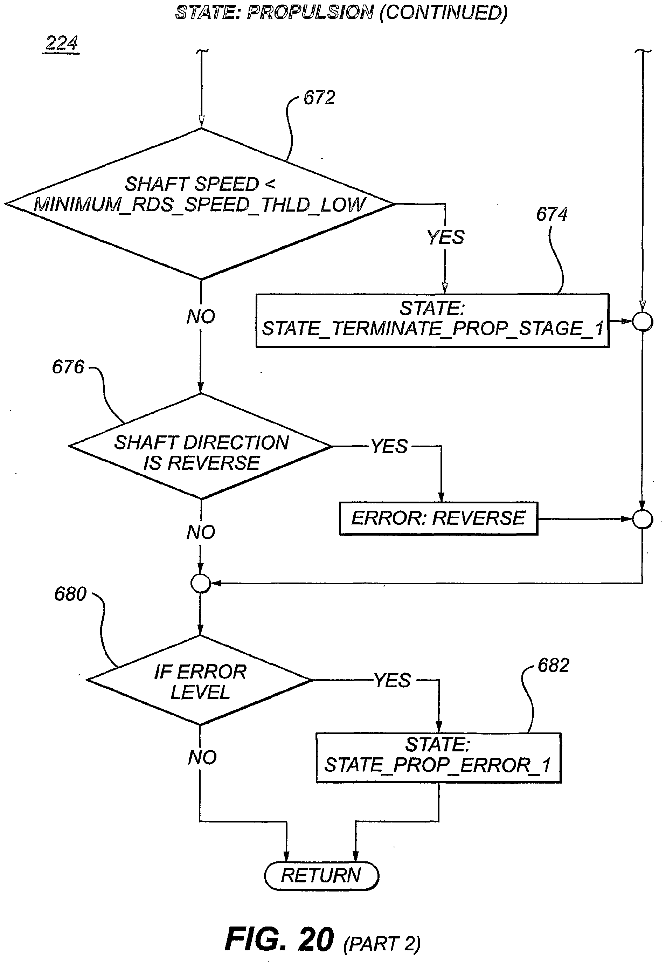

Referring then to **Fig. 20**, once the Propulsion state **224** is entered (step **660**), all solenoids **72**, **84**, **100**, **110** are switched on, and the swash plate **61** is allowed to move to the commanded propulsion angle (step **662**). A series of propulsion checks are made: is the drive shaft speed above the minimum threshold speed (step **672**), has the command not returned to the "standby" or is the accumulator capacity greater than 10% (step **668**), is the pump/motor unit still loaded (step **664**), and is the shaft still rotating in the forward direction (step **678**). If any of these conditions are not satisfied, then the process will proceed to the Terminate Propulsion state 1 stage **228** (steps **670**, **674**). Any other errors cause the process to proceed to the Propulsion Error 1 stage **226** (steps **666**, **678**, **680**, **682**).

### Propulsion Error 1 state

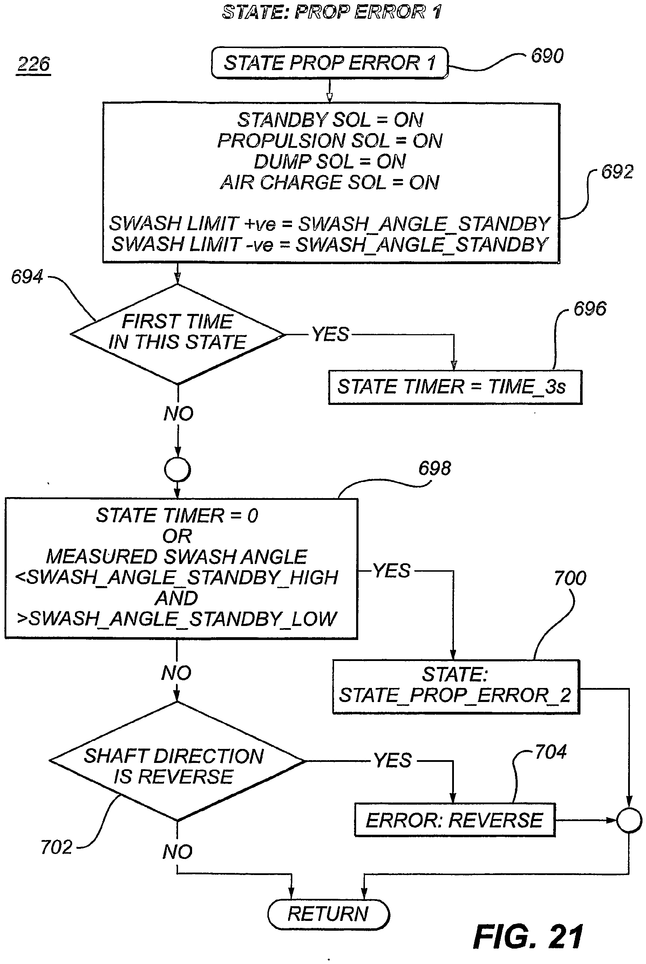

Referring then to **Fig. 21**, when the Propulsion Error 1 state **226** is entered (step **690**), all the solenoids **72**, **84**, **100**, **110** are switched on, and the swash plate **61** is commanded to the standby position (step **692**). A minimum state timer is set to three seconds, allowing up to three seconds for the swash plate **61** to move into the standby window (steps **694**, **696**, **698**). Once this has occurred, or the three second period expires, the process proceeds to Propulsion Error 2 state **222** (step **700**), unconditionally. If the shaft is rotating in the reverse direction, then an error flag is raised (step **704**).

### Terminate Propulsion Stage 1 state

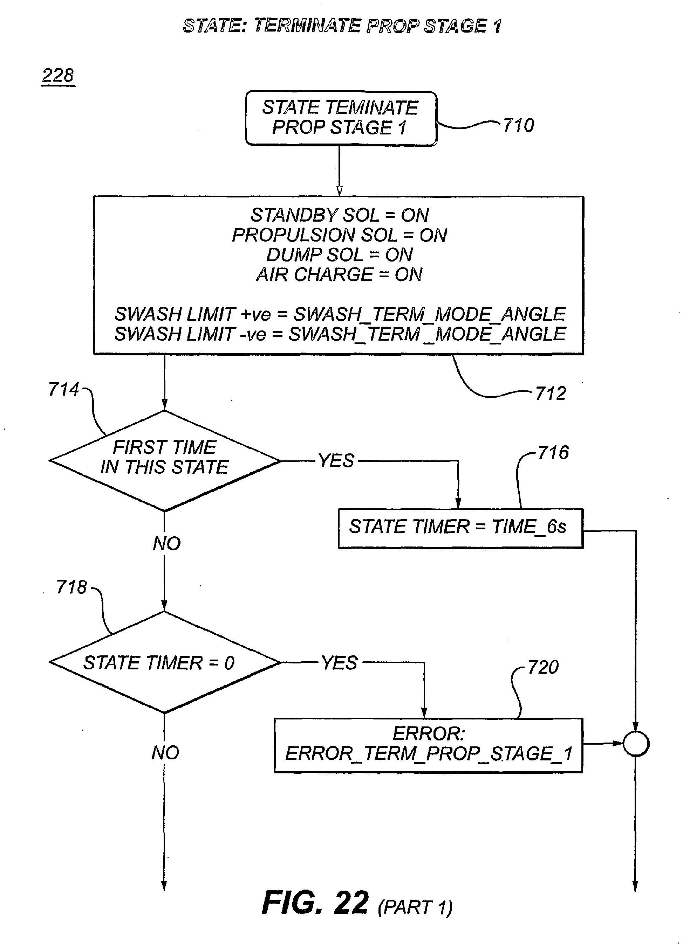

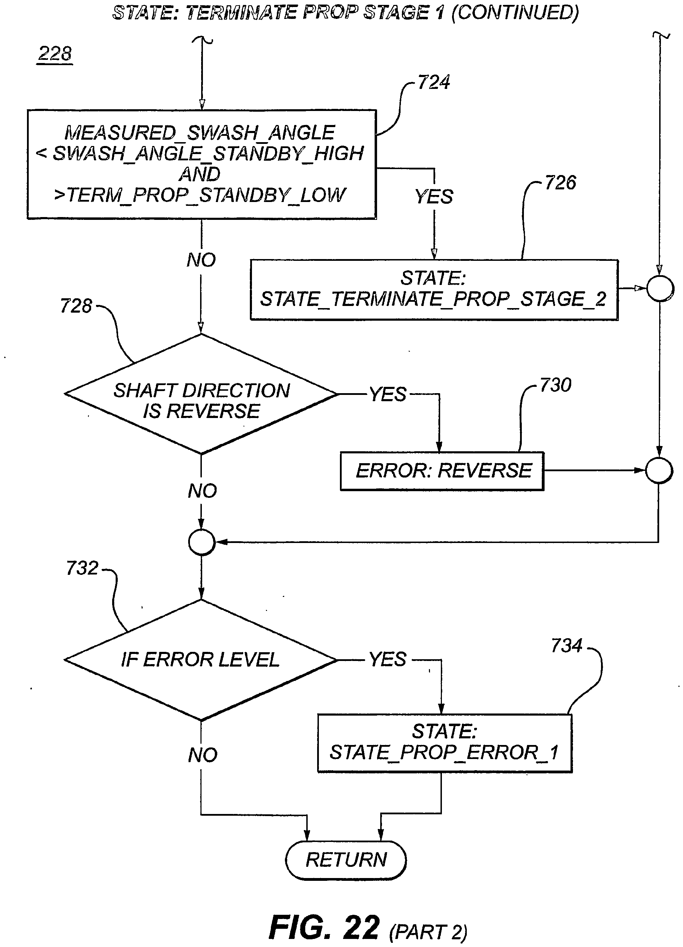

Referring then to **Fig. 22**, when the Terminate Propulsion Stage 1 state **228** is entered (step **710**), all the solenoids **72**, **84**, **100**, **110** will be activated, and the swash plate **61** is limited to the terminate mode angle value (step **714**). A state timer is set to six seconds, allowing that period of time for the swash plate **61** to move into the standby window (steps **714**, **716**, **718**, **724**). If the swash plate **61** fails to move into the standby window within the six second period, then the process proceeds to the Propulsion Error 1 state **226** (step **720**). If the condition is satisfied, however, the process proceeds to the Terminate Propulsion Stage 2 state **230** (step **726**). Any other error, including shaft rotating in reverse, results in the process proceeding to the Propulsion Error 1 state **226** (steps **720**, **723**, **730**, **732**, **734**).

### Terminate Propulsion Stage 2 state

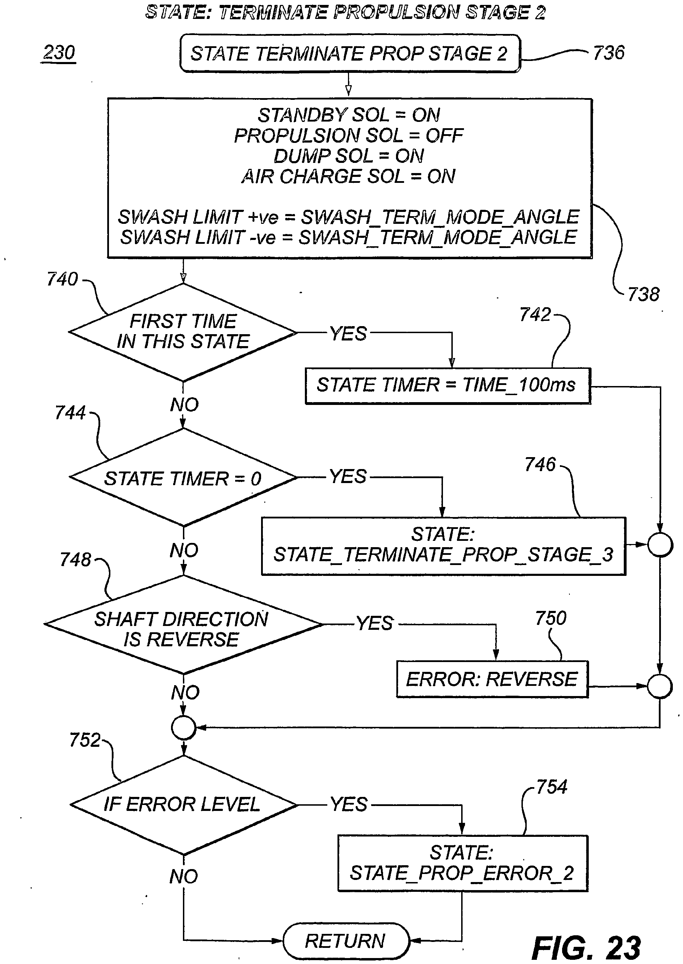

With reference to **Fig. 23**, when the Terminate Propulsion Stage 2 state **230** is entered (step **736**), the propulsion solenoid **100** is deactivated, however the standby solenoid **72** remains activated, and the pump/motor unit **60** is still loaded (step **738**). The swash plate 61 is commanded to the terminate mode angle (step **738** also) and a state timer is set to 100 ms (steps **740**, **742**). When the timer has decremented to 0 without any errors occurring (step **744**), the process will proceed to the Terminate Propulsion Stage 3 state **232** (step **746**). Any errors detected, including the drive shaft rotating in the reverse direction, will cause the process to proceed to the Propulsion Error 2 state **222** (steps **748**, **750**, **752**, **754**).

### Terminate Propulsion Stage 3 state

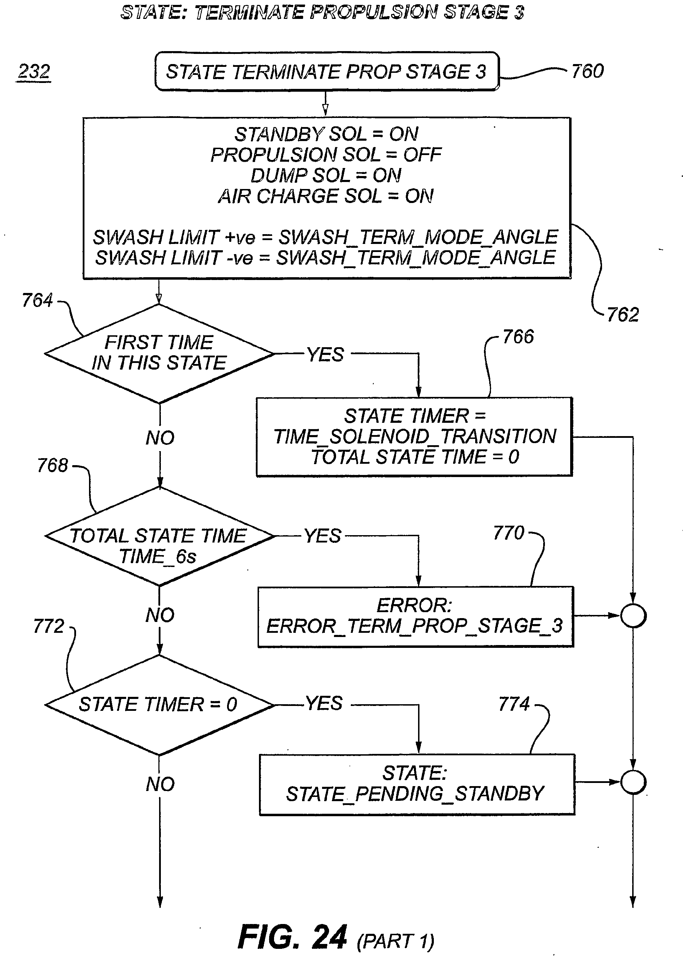

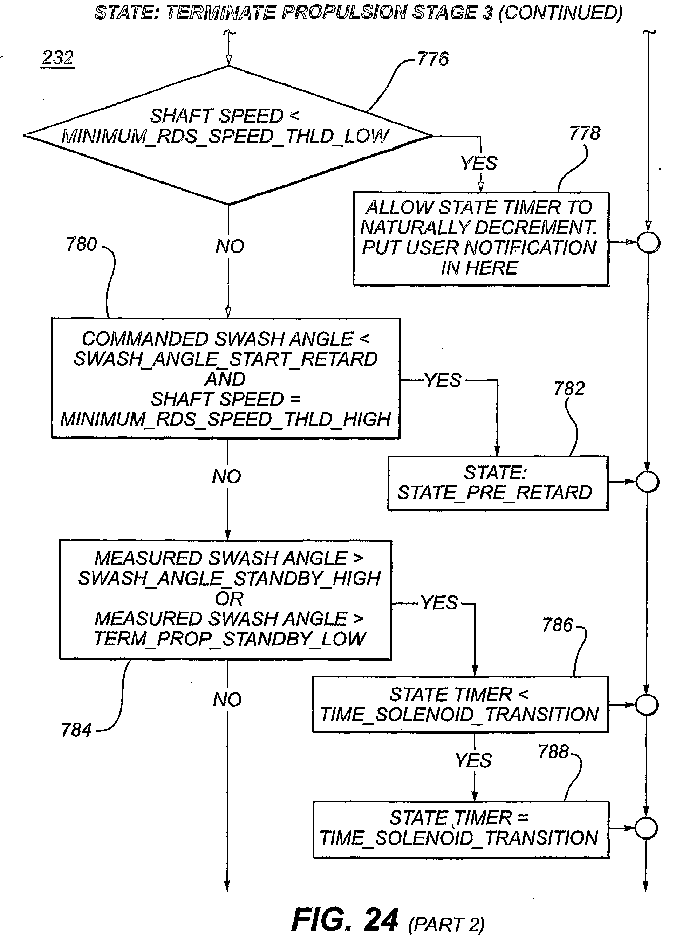

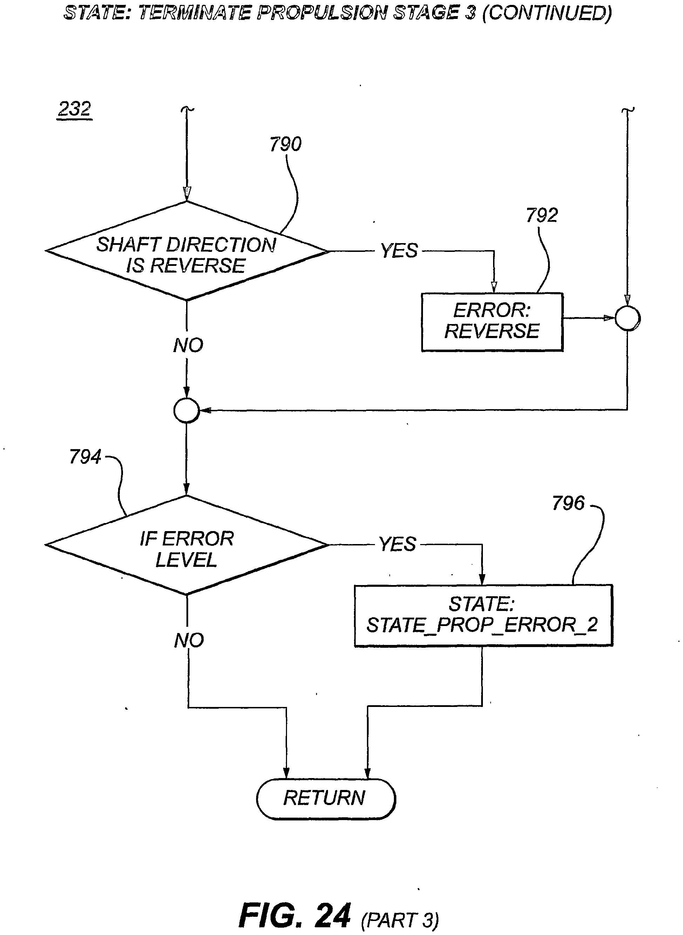

Referring then to **Fig. 24**, on entry into the Terminate Propulsion Stage 3 state **232** (step **760**), the solenoids **72**, **84**, **100**, **110** are set to loaded conditions, the pump/motor unit **60** will already be loaded, and the swash plate **61** is commanded to the terminate mode angle (step **762**). A minimum state timer is set to six seconds. A check is made of whether the drive shaft speed is above a minimum threshold (step **776**), then if the commanded mode has proceeded to Retard (step **780**). If so, the process checks the drive shaft speed and that the minimum transition time has passed (steps **776**, **786**, **788**). If these conditions are met, then the process proceeds to the Pre-retard state **210** (step **782**). If the commanded mode has not changed, the process checks that the commanded state has returned to standby (step **780**), and that the swash plate has moved to the standby position (step **784**), by the elapse of time, and then proceeds to the Pending Standby state **204** (step **774**). If none of the conditions are meeting within the period of six seconds or if any general or reverse drive shaft errors occur, then the process proceeds to the Propulsion Error 2 state **222** (steps **770**, **790**, **792**, **794**, **796**).

### Error state

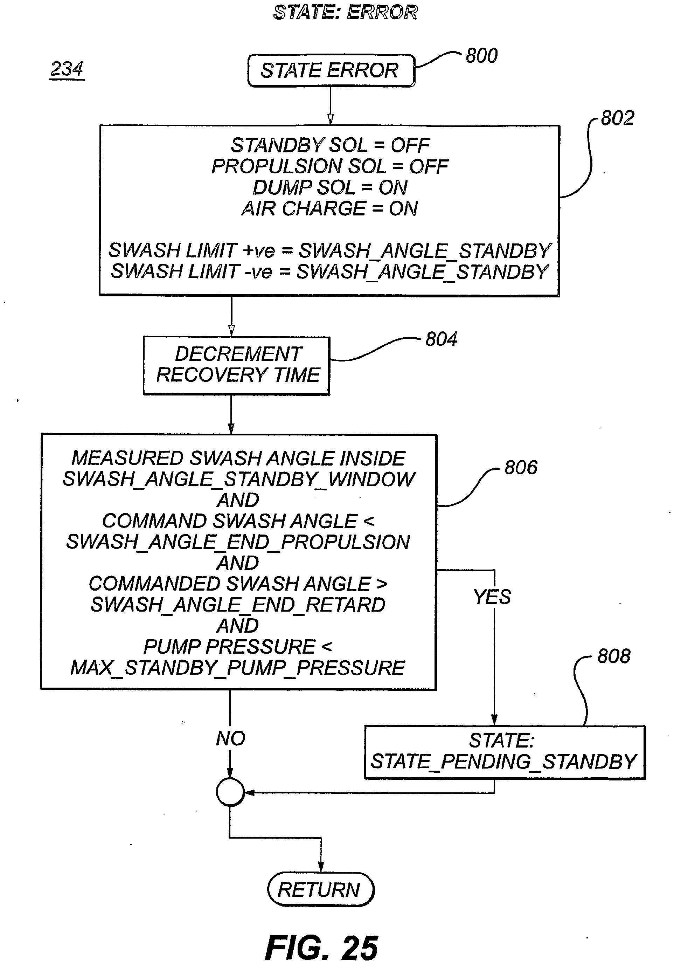

Referring then to **Fig. 25**, when the Error state **234** is entered (step **800**) the solenoids **72**, **84**, **100**, **110** are set to the Standby conditions and the swash plate **61** to the standby angle (step **802**). The process then decrements a recovery time measure (step **804**). The process is concerned with providing recovery times for errors and looking for swash plate and standby pressure stability (step **806**), to move to the Pending Standby state **204** (step **808**).

### Disengaged state

The Disengaged state **236** is the default position for the clutch **52**. The objective is to disengage the RDS **10** whenever possible, to avoid wear and slow drawing off of stored energy during Standby mode. It is required that both electric power and hydraulic pressure be present in order to move to the Pending Standby state **204**.

### Reverse state

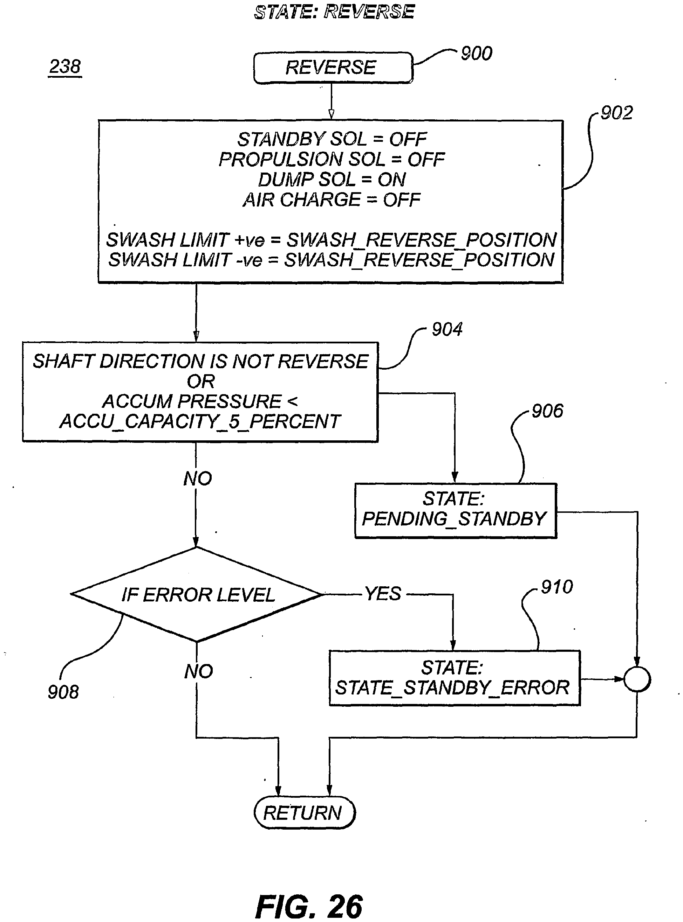

Referring then to **Fig. 26**, when the Reverse state **238** is entered (step **900**), the solenoids **72**, **84**, **100**, **110** are set to standby conditions and limits are placed on the swash plate actuated (step **902**). If the drive shaft is detected rotating in the reverse direction, or if the accumulator has a capacity of less than 5% (step **904**), then the process proceeds to the Pending Standby state **204** (step **906**). Otherwise, the process proceeds to the Standby Error state **208** (steps **908**, **910**).

### High-level strategy control

The high-level control strategy and low-level control strategy, in a preferred embodiment, are implemented as separate computer programs that pass variables between each other, but otherwise act autonomously. The low-level control strategy has responsibility of ensuring safe operation of the RDS **10**, in the form of absolute rules. The high-level control strategy also operates on rules concerned with safe vehicle operation. There thus is a two-tier approach to safe operation.

The high-level strategy control unit **28** received inputs from the vehicle throttle system **34**, an engine speed sensor **38**, and the drive shaft signal **29**, the available torque signal **30** and the actual torque signal **32** as shown in **Fig. 1**. The principal control variable is throttle position.

### Throttle

In some classes of vehicle, the throttle operation will provide that the first, say, 0 - 18% of throttle position is a form of engine braking (such as exhaust braking). The range of 20% - 60% may represent constant speed of the vehicle, and it is only throttle positions in excess of 60% that represent vehicle acceleration. Of course, in other vehicles, any throttle position > 0% may represent propulsion.

### Propulsion mode

As described previously, in the Propulsion mode the RDS **10** will be used as a source of energy for the vehicle **11.**

The high-level strategy control unit **28** performs a conversion from a (input) 'nominal throttle' signal **35** to a (output) 'commanded torque' signal **26** and a (output) 'reduced/modified throttle' signal **37**. This is expressed as 'torque split', being the relative contributions of the vehicle's engine **11** and the RDS **10**.

There are two basic approaches/modes to torque splitting: 'fuel saving' mode and 'boost' mode.

### Propulsion - Fuel saving mode

The approach of the fuel saving mode is to replace some portion of engine torque by the RDS **10** operating in Propulsion mode, and between the engine **11** and the RDS **10**, providing the appropriate torque for the throttle setting selected by the driver.

One benefit of this mode (as the name suggests) is to save on the consumption of fuel by recovering and utilising the vehicle's kinetic energy. Any reduction in fuel usage has a concomitant reduction in greenhouse gas emissions.

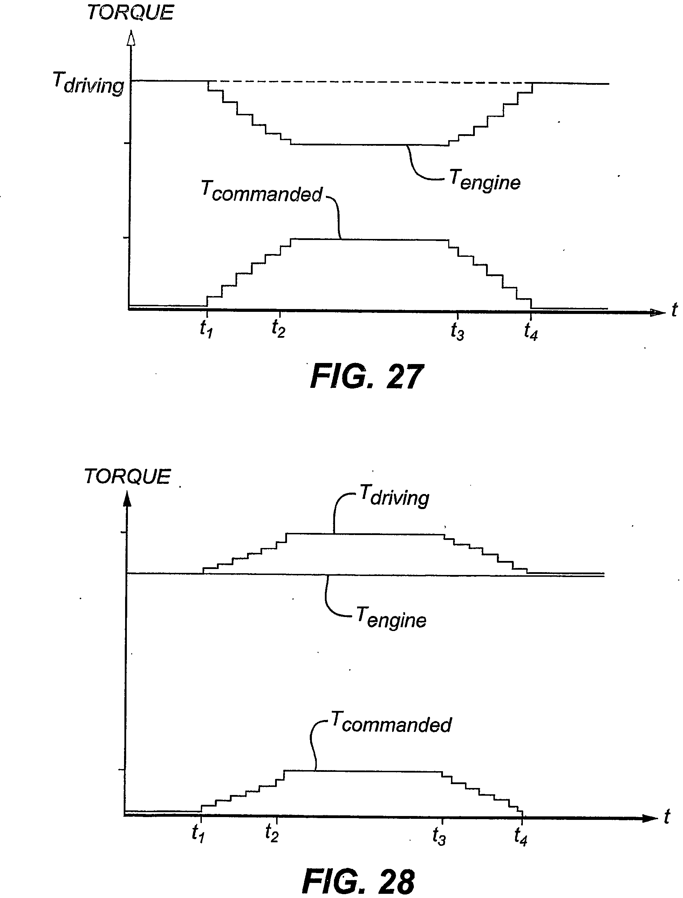

Referring now to **Fig. 27**, a torque splitting arrangement is shown. It is assumed a constant propulsion torque is to be imparted to the drive train **12.** The value T_{drive} is provided entirely by the engine in the period 0 - t₁. At time t₁, the RDS **10** moves from standby into propulsion mode, and steps to a constant commanded torque value T_{comm}. At the same time, the torque contributed by the engine 11 steps down such that the value T_{drive} remains constant. In the period t₂ - t₃, the engine **11** and the RDS **10** provide a respective constant torque contribution. In the period t₃ - t₄, a similar stepping occurs such that from t₄ onwards, the only contribution is from the engine **11.** Typically this represents the situation where the available torque signal **30** has reduced to or below 10% of full capacity. For all time periods, the relation: T_{drive} = T_{engine} + T_{comm} = constant, holds true, in this example. However, engine torque is never constant as a function of speed. Thus, T_{engine} will rarely be able to be held constant in a propulsion event, meaning that the RDS **10** torque component will not be piecewise linear, but at all times attempting to maintain the driving torque to be constant.

### Propulsion-Boost mode

The basic idea behind the boost mode is to supplement engine torque to give an additional short term power capacity on propulsion, and to over-work an engine during retardation to - as quickly as possible - charge the accumulator **62** to be ready for the next propulsion event. In other words, the consumption of fuel is not a concern.

**Fig. 28** shows graphically the relation: T_{drive} = T_{engine} + T_{comm}, where, in the period t₁ - t₄, the engine torque is supplemented by the RDS torque.

### Throttle modification

Referring now to the flow diagram of **Fig. 29**, the vehicle's throttle position is continuously monitored (step **1000**). A calculation is performed to give a driving torque value (step **1002**). This process requires the engine speed signal **38.** **Fig. 30** shows a representative diagram of engine torque versus engine speed for a 100% throttle setting. The characteristic typically needs to be measured. It is assumed that there is a linear relationship between throttle position and torque for any given speed. Thus, for say, a 50% throttle position, then for the relevant engine speed, the nominal engine torque T_{50%} can be determined.

The nominal engine torque is known, and needs to be referenced to a torque value at the drive shaft **50**, where the RDS **10** acts (step **1004**). Referring now to **Fig. 31**, a block diagram of the mechanical components of the drive train are shown. It is therefore necessary to mathematically model the torque as it passes a torque converter **1020**, a gearbox **1022** and a transfer case **1024**. Torque variously will be a function of speed, gear losses, torque split between front wheels **1026** and rear wheels **13**, etc. The **mathematical** model can be developed based on measurements that provide data sets forming the basis of look-up tables.

Now that the torque at the drive shaft (equivalent to the throttle position) is known, the torque split is determined (step **1006**). To do this, the operational mode is firstly read (step **1008**). Assume for the purposes of the discussion that Fuel Saving mode is selected, meaning that a constant torque approach is adopted (see **Fig. 28**). The instantaneous available RDS torque **30** is read (step **1010**), and a target torque (i.e. commanded) value is selected to be less than the available torque. The target torque value might typically be 65% of the available torque. The available torque will decrease over time for any propulsion event, and it may be necessary to reduce the target torque to track the reducing available torque.

The (time variant) commanded/target torque value **26** thus is provided to the low-level strategy control unit **14** (step **1012**). The corresponding engine torque component must be converted back to a modified throttle position (step **1014**), following a reverse process according to the drive train model as discussed above. The thus-derived modified throttle position **37** is returned to the throttle system **34** (step **1016**).

There will be situations where there is a form of throttle-related engine braking, meaning that only a partial range of throttle position represents propulsion. In such a case an appropriate offset will need to be provided to ensure the RDS mode of operation matches that intended by the driver operating the throttle.

The high-level strategy control unit **28** implements a PID control algorithm that uses the actual torque signal **32** as a feedback variable to be compared with the commanded torque value **26**.

### Retard - fuel saving mode of operation

During retard, the objective is to absorb drive shaft torque at a constant level to give a constant deceleration, and to charge the accumulator **62** to a full condition within a time period characteristic of a deceleration episode.

**Fig. 32** shows the RDS torque characteristic in a retard mode of operation. The high-level strategy control unit **28** seeks to draw-off energy from the drive train at a constant torque. The commanded target torque value, T_{target}, is maintained to be within a range bounded by maximum and minimum values, Tₘₐₓ, Tₘᵢₙ. The real-time value of T_{target} as a function of throttle position is determined empirically, in consideration of giving the driver a natural 'feel' of deceleration. Tₘₐₓ will be set to achieve a maximum braking effect, typically 0.15g.

### Retard - Boost mode

**Fig. 34** graphically shows the same relationship T_{drive} = T_{engine} + T_{comm} = constant. In other words, the driving (retarding) torque remains constant, and the recharging of the accumulator **62** occurs by the engine working harder during the period t₁ - t₄.

### Throttle modification

During Retard mode operation, there is no need to be concerned with engine throttle setting, save where engine braking is provided, in which case the target retard torque may be adjusted to ensure a constant deceleration to account for the engine braking contribution. Once, again, a PID feedback control algorithm will be used to control the target retard torque against the actual torque **32**.

### Transmission considerations

The foregoing description contemplates a vehicle having an automatic transmission. Of course, many vehicles will have manual transmissions, which means the throttle and vehicle clutch pedals are constantly operated. It is thus necessary to discriminate a clutching event over a braking/deceleration event. This can be done by detecting near-simultaneous operation of the clutch pedal and reduction in throttle (typically to a zero setting), so that the RDS **10** might continue in its current mode regardless of a clutching event taking place.

## Claims

1. An electronic controller (14,28) for a hydraulic regenerative drive system (10), said controller receiving a nominal engine throttle signal (35) and generating a time-variant torque signal (26) therefrom, and wherein said controller (14,28) converts said torque signal (26) to swash plate angle of a pump/motor unit (60) and controls (i) a controlled-torque retard mode of operation of said drive system, in which swash plate angle of said pump/motor unit (60) is controlled by said torque signal (26), and a speed signal and a pressure signal from a pump/motor unit (60) of said drive system, to impart a dynamically calculated retarding torque to a vehicle drive shaft; and (ii) a controlled-torque propulsion mode of operation, in which said swash plate angle of said pump/motor unit (60) is controlled by said torque signal, said speed signal and said pressure signal to impart a dynamically calculated propelling torque to a drive shaft (12) of said drive system; and
**characterised in that** said electronic controller (14,28) performs said conversion between said torque signal and swash plate angle on the basis of searching predetermined characteristics of torque versus pressure versus speed for a set of swash plate angles to locate one or more closest torque values for the predetermined pressure and speed closest to the measured pump/motor unit pressure and pump/motor unit speed, and deriving a swash plate angle from the angle values corresponding to said closest torque values.

2. The controller according to claim 1, wherein said electronic controller (14,28) further outputs a modified engine throttle signal (37), and wherein said torque signal (26) and the vehicle engine torque corresponding to the modified throttle signal (37) are equal to the torque corresponding to the nominal engine throttle signal (35).

3. The controller according to claim 2, wherein said electronic controller (14,28) generates said torque signal (26) and said modified engine throttle signal (37) on the basis of a mathematical model of drive train elements between the engine of said vehicle and said drive train connection-point of said pump/motor unit (60).

4. A hydraulic regenerative drive system (10) for a vehicle comprising:
an electronic controller according to any of the preceding claims (14,28);
a hydraulic control circuit (18) receiving controlling signals (15) from the electronic controller (14,28);
a reservoir (62) in fluid communication with said hydraulic control circuit (18) for storing hydraulic fluid;
a pump/motor unit (60) having a swash plate (61) providing variable displacement, said pump/motor unit being in fluid communication with said hydraulic control circuit (18) and adapted for connection to the drive train (12) of a vehicle, and having a speed sensor (120) and a pressure sensor (122) providing speed and pressure signals to said electronic controller (14,28); and
an accumulator (64) in fluid communication with said hydraulic control circuit (18);
wherein in the
controlled-torque retard mode of operation, said pump/motor unit (60) pumps fluid from said reservoir (62) to said accumulator (64) via said hydraulic control circuit (18), and in the
controlled-torque propulsion mode of operation, and said pump/motor unit (60) motors under influence of fluid from said accumulator (64) passing to said reservoir (62) via said hydraulic control circuit (18).

5. The system according to claim 4, wherein said electronic controller (14,28) further controls a standby mode of operation in which said pump/motor unit (60) neither pumps nor drives, and further wherein said electronic controller (14,28) enables said retard mode to occur only as a transition from said standby state (206), and enables said propulsion mode to occur only as a transition from said standby state (206).

6. The system according to claim 5, wherein said electronic controller (14,28) further controls transition states between said modes, including:
a pre-propulsion state between standby mode and propulsion mode in which said controller determines that said pump/motor unit pressure exceeds a threshold value before causing said propulsion mode to occur; and
a pre-retard state between standby mode and retard mode in which said controller determines that said pump/motor unit pressure is lower than a threshold value before causing said retard mode to occur.

7. The system according to claim 6, wherein said transition states further include:
a terminate propulsion state (228, 230, 232) between propulsion mode and standby mode;
a terminate retard state (216) between retard mode and standby mode;
and wherein said electronic controller (14,28) further determines in said transition states that respective elements of said hydraulic control circuit (18) have correctly changed condition in response to said controlling signals before causing a respective mode to occur.

8. A method for controlling operation of a hydraulic regenerative drive system (10) comprising the steps of:
generating a time-variant torque signal (26) from a nominal engine throttle signal (35); and
instructing either (i) a controlled-torque retard mode of operation, in which a swash plate angle of a pump/motor unit (60) is controlled by said torque signal, and a speed signal and a pressure signal from a pump/motor unit (60) of said drive system, to impart a dynamically calculated retarding torque to a vehicle drive shaft, or (ii) a controlled-torque propulsion mode of operation, in which said swash plate angle is controlled by said torque signal, said speed signal and said pressure signal to impart a dynamically calculated propelling torque to a drive shaft of said drive system; and
**characterised by** converting said torque signal to swash plate angle by searching predetermined characteristics of torque versus pressure versus speed for a set of swash plate angles to locate one or more closest torque values for the predetermined pressure and speed closest to measured pump/motor unit pressure and pump/motor unit speed, and deriving a swash plate angle from the angle values corresponding to said closest torque values.

9. The method according to claim 8, comprising the further step of outputting a modified engine throttle signal (37), and wherein said torque signal (26) and said modified engine throttle signal (37) are generated on the basis of a mathematical model of drive train elements between the engine of said vehicle and said drive train connection-point of said pump/motor unit (60).

10. The method according to claim 8 or 9, comprising the further steps of enabling said retard mode to occur only as a transition from a standby state (206), and enabling said propulsion mode to occur only as a transition from said standby state (206).

11. The method according to claim 10, comprising the further steps of:
enabling a transition pre-propulsion state (218, 220, 222) between standby mode and propulsion mode in which it is determined that pump/motor unit pressure exceeds a threshold value before causing said propulsion mode to occur; and
enabling a transition pre-retard state (210) between standby mode and retard mode in which it is determined that pump/motor unit pressure is lower than a threshold value before causing said retard mode to occur.

12. The method according to claim 11, comprising the further steps of:
enabling a transition terminate propulsion state between propulsion mode and standby mode;
enabling a transition terminate retard state between retard mode and standby mode; and
determining in said transition states that respective elements of a hydraulic control circuit have correctly changed condition before causing a respective mode to occur.

13. A computer program product comprising a computer program stored on a storage medium, said program including code means for performing the steps of any one of claims 8 to 12.

## Patentansprüche

1. Elektronischer Controller (14, 28) für ein hydraulisches regeneratives Antriebssystem (10), wobei der genannte Controller ein Nenn-Motordrosselklappensignal (35) empfängt und davon ein zeitvariantes Drehmomentsignal (26) erzeugt und wobei der genannte Controller (14, 28) das genannte Drehmomentsignal (26) in einen Schrägscheibenwinkel einer Pumpe-Motor-Einheit (60) umwandelt und Folgendes steuert: (i) eine Verzögerungsbetriebsart mit geregeltem Drehmoment des genannten Antriebssystems, bei der der Schrägscheibenwinkel der genannten Pumpe-Motor-Einheit (60) von dem genannten Drehmomentsignal (26) sowie einem Geschwindigkeitssignal und einem Drucksignal von einer Pumpe-Motor-Einheit (60) des genannten Antriebssystems gesteuert wird, um einer Fahrzeugantriebswelle ein dynamisch berechnetes Verzögerungsdrehmoment zu erteilen, und (ii) eine Vortriebbetriebsart mit geregeltem Drehmoment, bei der der genannte Schrägscheibenwinkel der genannten Pumpe-Motor-Einheit (60) von dem genannten Drehmomentsignal, dem genannten Geschwindigkeitssignal und dem genannten Drucksignal gesteuert wird, um einer Antriebswelle (12) des genannten Antriebssystems ein dynamisch berechnetes Vortriebsdrehmoment zu erteilen; und
**dadurch gekennzeichnet, dass** der genannte elektronische Controller (14, 28) die genannte Umwandlung zwischen dem genannten Drehmomentsignal und dem genannten Schrägscheibenwinkel auf der Basis des Durchsuchens vorbestimmter Kennlinien von Drehmoment zu Druck zu Geschwindigkeit für einen Satz von Schrägscheibenwinkeln, um einen oder mehrere nächstliegende Drehmomentwerte für den vorbestimmten Druck und die vorbestimmte Geschwindigkeit auszumachen, die dem gemessenen Druck der Pumpe-Motor-Einheit und der gemessenen Geschwindigkeit der Pumpe-Motor-Einheit am nächsten liegen, und des Ableitens eines Schrägscheibenwinkels von den Winkelwerten, die den genannten nächstliegenden Drehmomentwerten entsprechen, durchführt.

2. Controller nach Anspruch 1, wobei der genannte elektronische Controller (14, 28) ferner ein modifiziertes Motordrosselklappensignal (37) ausgibt und wobei das genannte Drosselklappensignal (26) und das dem modifizierten Drosselklappensignal (37) entsprechende Fahrzeugmotordrehmoment gleich dem Drehmoment sind, das dem Nenn-Motordrosselklappensignal (35) entspricht.

3. Controller nach Anspruch 2, wobei der genannte elektronische Controller (14, 28) das genannte Drehmomentsignal (26) und das genannte modifizierte Motordrosselklappensignal (37) auf der Basis eines mathematischen Modells von Triebstrangelementen zwischen dem Motor des genannten Fahrzeugs und dem genannten Triebstrang-Verbindungspunkt der genannten Pumpe-Motor-Einheit (60) erzeugt.

4. Hydraulisches regeneratives Antriebssystem (10) für ein Fahrzeug, umfassend:
einen elektronischen Controller nach einem der vorhergehenden Ansprüche (14, 28),
einen hydraulischen Steuerkreis (18), der Steuersignale (15) von dem elektronischen Controller (14, 28) empfängt,
einen Vorratsbehälter (62) zum Speichern von Hydraulikfluid, der mit dem genannten hydraulischen Steuerkreis (18) in Fluidkommunikation steht,
eine Pumpe-Motor-Einheit (60), die eine verstellbare Verdrängung liefernde Schrägscheibe (61) hat, wobei die genannte Pumpe-Motor-Einheit in Fluidkommunikation mit dem genannten hydraulischen Steuerkreis (18) steht und zur Verbindung mit dem Triebstrang (12) eines Fahrzeugs ausgeführt ist, und einen Geschwindigkeitssensor (120) und einen Drucksensor (122) hat zum Anlegen von Geschwindigkeits- und Drucksignalen an den genannten elektronischen Controller (14, 28) und
einen Druckspeicher (64), der mit dem genannten hydraulischen Steuerkreis (18) in Fluidkommunikation steht,
wobei
die genannte Pumpe-Motor-Einheit (60) in der Verzögerungsbetriebsart mit geregeltem Drehmoment Fluid aus dem genannten Vorratsbehälter (62) über den genannten hydraulischen Steuerkreis (18) zu dem genannten Druckspeicher (64) pumpt und
die genannte Pumpe-Motor-Einheit (60) in der Vortriebbetriebsart mit geregeltem Drehmoment unter Einfluss von Fluid aus dem genannten Druckspeicher (64) läuft, das über den genannten hydraulischen Steuerkreis (18) zu dem genannten Vorratsbehälter strömt.

5. System nach Anspruch 4, wobei der genannte elektronische Controller (14, 28) ferner eine Bereitschaftsbetriebsart steuert, in der die genannte Pumpe-Motor-Einheit (60) weder pumpt noch antreibt, und wobei ferner der genannte elektronische Controller (14, 28) den Verzögerungsbetrieb nur als einen Übergang aus dem genannten Bereitschaftszustand (206) stattfinden lässt und den genannten Vortriebsbetrieb nur als einen Übergang aus dem genannten Bereitschaftszustand (206) stattfinden lässt.

6. System nach Anspruch 5, wobei der genannte elektronische Controller (14, 28) ferner Übergangszustände zwischen den genannten Betriebsarten steuert, einschließlich:
einem Vor-Vortriebszustand zwischen dem Bereitschaftsbetrieb und dem Vortriebsbetrieb, in dem der genannte Controller ermittelt, dass der Druck der genannten Pumpe-Motor-Einheit einen Schwellenwert übersteigt, bevor er das Stattfinden des genannten Vortriebsbetriebs veranlasst, und
einem Vor-Verzögerungszustand zwischen dem Bereitschaftsbetrieb und dem Verzögerungsbetrieb, in dem der genannte Controller ermittelt, dass der Druck der genannten Pumpe-Motor-Einheit niedriger als ein Schwellenwert ist, bevor er das Stattfinden des genannten Verzögerungsbetriebs veranlasst.

7. System nach Anspruch 6, wobei die genannten Übergangszustände ferner Folgendes beinhalten:
einen Vortriebbeendigungszustand (228, 230, 232) zwischen Vortriebsbetrieb und Bereitschaftsbetrieb,
einen Verzögerungsbeendigungszustand (216) zwischen Verzögerungsbetrieb und Bereitschaftsbetrieb,
und wobei der genannte elektronische Controller (14, 28) ferner in den genannten Übergangszuständen ermittelt, dass jeweilige Elemente des genannten hydraulischen Steuerkreises (18) ihre Verfassung als Reaktion auf die genannten Steuersignale richtig geändert haben, bevor er das Stattfinden einer jeweiligen Betriebsart veranlasst.

8. Verfahren zum Steuern des Betriebs eines hydraulischen regenerativen Antriebssystems (10), das die folgenden Schritte umfasst:
Erzeugen eines zeitvarianten Drehmomentsignals (26) anhand eines Nenn-Motordrosselklappensignals (35) und
Anweisen entweder (i) einer Verzögerungsbetriebsart mit geregeltem Drehmoment, bei der ein Schrägscheibenwinkel einer Pumpe-Motor-Einheit (60) von dem genannten Drehmomentsignal (26) sowie einem Geschwindigkeitssignal und einem Drucksignal von einer Pumpe-Motor-Einheit (60) des genannten Antriebssystems gesteuert wird,um einer Fahrzeugantriebswelle ein dynamisch berechnetes Verzögerungsdrehmoment zu erteilen, oder (ii) einer Vortriebsbetriebsart mit geregeltem Drehmoment, bei der der genannte Schrägscheibenwinkel von dem genannten Drehmomentsignal, dem genannten Geschwindigkeitssignal und dem genannten Drucksignal gesteuert wird, um einer Antriebswelle des genannten Antriebssystems ein dynamisch berechnetes Vortriebsdrehmoment zu erteilen, und
**gekennzeichnet durch** Umwandeln des genannten Drehmomentsignals in einen Schrägscheibenwinkel **durch** Durchsuchen vorbestimmter Kennlinien von Drehmoment zu Druck zu Geschwindigkeit für einen Satz von Schrägscheibenwinkeln, um einen oder mehrere nächstliegende Drehmomentwerte für den vorbestimmten Druck und die vorbestimmte Geschwindigkeit auszumachen, die dem gemessenen Druck der Pumpe-Motor-Einheit und der gemessenen Geschwindigkeit der Pumpe-Motor-Einheit am nächsten liegen, und Ableiten eines Schrägscheibenwinkels von den Winkelwerten, die den genannten nächstliegenden Drehmomentwerten entsprechen.

9. Verfahren nach Anspruch 8, das den weiteren Schritt des Ausgebens eines modifizierten Motordrosselklappensignals (37) aufweist und wobei das genannte Drehmomentsignal (26) und das genannte modifizierte Motordrosselklappensignal (37) auf der Basis eines mathematischen Modells von Triebstrangelementen zwischen dem Motor des genannten Fahrzeugs und dem genannten Triebstrang-Verbindungspunkt der genannten Pumpe-Motor-Einheit (60) erzeugt werden.

10. Verfahren nach Anspruch 8 oder 9, das die weiteren Schritte des Stattfindenlassens des genannten Verzögerungsbetriebs nur als Übergang aus einem Bereitschaftszustand (206) und des Stattfindenlassens des genannten Vortriebsbetriebs nur als Übergang aus dem genannten Bereitschaftszustand (206) aufweist.

11. Verfahren nach Anspruch 10, das die folgenden weiteren Schritte aufweist:
Aktivieren eines Übergangs-Vor-Vortriebszustands (218, 220, 222) zwischen Bereitschaftsbetrieb und Vortriebsbetrieb, in dem ermittelt wird, dass der Druck der Pumpe-Motor-Einheit einen Schwellenwert übersteigt, bevor das Stattfinden des genannten Vortriebsbetriebs veranlasst wird, und
Aktivieren eines Übergangs-Vor-Verzögerungszustands (210) zwischen Bereitschaftsbetrieb und Verzögerungsbetrieb, in dem ermittelt wird, dass der Druck der Pumpe-Motor-Einheit niedriger als ein Schwellenwert ist, bevor das Stattfinden des genannten Verzögerungsbetriebs veranlasst wird.

12. Verfahren nach Anspruch 11, das die folgenden weiteren Schritte aufweist:
Aktivieren eines Übergangs-Vortriebsbeendigungszustands zwischen Vortriebsbetrieb und Bereitschaftsbetrieb,
Aktivieren eines Übergangs-Verzögerungsbeendigungszustands zwischen Verzögerungsbetrieb und Bereitschaftsbetrieb und
Ermitteln in den genannten Übergangszuständen, dass jeweilige Elemente eines hydraulischen Steuerkreises ihre Verfassung richtig geändert haben, bevor das Stattfinden einer jeweiligen Betriebsart veranlasst wird.

13. Computerprogrammprodukt, umfassend ein in einem Speichermedium gespeichertes Computerprogramm, wobei das Programm Codemittel zum Durchführen der Schritte nach einem der Ansprüche 8 bis 12 beinhaltet.

## Revendications

1. Unité de commande électronique (14, 28) pour un système d'entraînement régénératif hydraulique (10), ladite unité de commande recevant un signal nominal d'étranglement moteur (35) et générant un signal de couple variant dans le temps (26) à partir de celui-ci, et ladite unité de commande (14, 28) convertissant ledit signal de couple (26) en un angle de disque flottant d'une pompe/unité motrice (60) et commande (i) un mode de fonctionnement de retard à couple commandé dudit système d'entraînement, dans lequel l'angle de disque flottant de ladite pompe/unité motrice (60) est commandé par ledit signal de couple (26), et un signal de vitesse et un signal de pression provenant d'une pompe/unité de motrice (60) dudit système d'entraînement, pour conférer un couple de retard calculé dynamiquement à un arbre d'entraînement de véhicule ; et (ii) un mode de fonctionnement de propulsion à couple commandé, dans lequel ledit angle de disque flottant de ladite pompe/unité motrice (60) est commandé par ledit signal de couple, ledit signal de vitesse et ledit signal de pression pour conférer un couple de propulsion calculé dynamiquement à un arbre d'entraînement (12) dudit système d'entraînement ; et
**caractérisé en ce que** ladite unité de commande électronique (14, 28) exécute ladite conversion entre lesdits signal de couple et angle de disque flottant en recherchant des caractéristiques prédéterminées de couple/pression/vitesse pour un ensemble d'angles de disque flottant afin de déterminer une ou plusieurs valeurs de couple les plus proches pour la pression et la vitesse prédéterminées les plus proches de la pression de la pompe/unité motrice et de la vitesse de la pompe/unité motrice mesurées, et en dérivant un angle de disque flottant à partir des valeurs d'angle correspondant auxdites valeurs de couple les plus proches.

2. Unité de commande selon la revendication 1, dans laquelle ladite unité de commande électronique (14, 28) produit en outre en sortie un signal d'étranglement moteur modifié (37), et ledit signal de couple (26) et le couple de moteur de véhicule correspondant au signal d'étranglement modifié (37) étant égaux au couple correspondant au signal d'étranglement moteur nominal (35).

3. Unité de commande selon la revendication 2, dans laquelle ladite unité de commande électronique (14,28) génère ledit signal de couple (26) et ledit signal d'étranglement moteur modifié (37) en fonction d'un modèle mathématique d'éléments de train d'entraînement entre le moteur dudit véhicule et ledit point de connexion du train d'entraînement de ladite pompe/unité motrice (60).

4. Système d'entraînement régénératif hydraulique (10) pour véhicule comprenant :
une unité de commande électronique selon l'une quelconque des revendications précédentes (14, 28) ;
un circuit de commande hydraulique (18) recevant des signaux de commande (15) depuis l'unité de commande électronique (14, 28) ;
un réservoir (62) en communication fluidique avec ledit circuit de commande hydraulique (18) pour stocker un fluide hydraulique ;
une pompe/unité motrice (60) ayant un disque flottant (61) à déplacement variable, ladite pompe/unité motrice étant en communication fluidique avec ledit circuit de commande hydraulique (18) et adaptée pour être connectée au train d'entraînement (12) d'un véhicule, et ayant un capteur de vitesse (120) et un capteur de pression (122) qui fournissent des signaux de vitesse et de pression à ladite unité de commande électronique (14, 28) ; et
un accumulateur (64) en communication fluidique avec ledit circuit de commande hydraulique (18) ;
dans lequel
dans le mode de fonctionnement de retard à couple commandé, ladite pompe/unité motrice (60) pompe un fluide depuis ledit réservoir (62) vers ledit accumulateur (64) par l'intermédiaire dudit circuit de commande hydraulique (18), et
dans le mode de fonctionnement de propulsion à couple commandé, ladite pompe/unité motrice (60) est activée sous l'influence du fluide depuis ledit accumulateur (64) passant audit réservoir (62) par l'intermédiaire dudit circuit de commande hydraulique (18).

5. Système selon la revendication 4, dans lequel ladite unité de commande électronique (14, 28) commande en outre un mode de fonctionnement de veille dans lequel ladite pompe/unité motrice (60) ne pompe pas et n'entraîne pas, et en outre dans lequel ladite unité de commande électronique (14, 28) active ledit mode de retard pour qu'il ne se produise qu'en transition après ledit état de veille (206), et active ledit mode de propulsion pour qu'il ne se produise qu'en transition après ledit état de veille (206).

6. Système selon la revendication 5, dans lequel ladite unité de commande électronique (14, 28) commande en outre des états de transition entre lesdits modes, comportant :
un état de pré-propulsion entre le mode de veille et le mode de propulsion dans lequel ladite unité de commande détermine que la pression de ladite pompe/unité motrice dépasse une valeur de seuil avant l'activation dudit mode de propulsion ; et
un état de pré-retard entre le mode de veille et le mode de retard dans lequel ladite unité de commande détermine que ladite pression de pompe/unité motrice est inférieure à une valeur de seuil avant l'activation dudit mode de retard.

7. Système selon la revendication 6, dans lequel lesdits états de transition comportent en outre :
un état de fin de propulsion (228, 230, 232) entre le mode de propulsion et le mode de veille ;
un état de fin de retard (216) entre le mode de retard et le mode de veille ;
et dans lequel ladite unité de commande électronique (14, 28) détermine en outre dans lesdits états de transition que des éléments respectifs dudit circuit de commande hydraulique (18) ont correctement changé de condition en réponse auxdits signaux de commande avant d'activer un mode respectif.

8. Procédé de commande du fonctionnement d'un système d'entraînement régénératif hydraulique (10), comprenant les étapes suivantes :
génération d'un signal de couple variant dans le temps (26) à partir d'un signal nominal d'étranglement moteur nominal (35) ; et
commande soit (i) d'un mode de fonctionnement de retard à couple commandé, dans lequel un angle de disque flottant d'une pompe /unité motrice (60) est commandé par ledit signal de couple, et un signal de vitesse et un signal de pression provenant d'une pompe/unité motrice (60) dudit système d'entraînement, pour conférer un couple de retard calculé dynamiquement à un arbre d'entraînement de véhicule, ou (ii) un mode de fonctionnement de propulsion à couple commandé, dans lequel ledit angle de disque flottant est commandé par ledit signal de couple, ledit signal de vitesse et ledit signal de pression pour conférer un couple de propulsion calculé dynamiquement à un arbre d'entraînement dudit système d'entraînement ; et
**caractérisé par** la conversion dudit signal de couple en un angle de disque flottant en recherchant des caractéristiques prédéterminées de couple/pression/vitesse pour un ensemble d'angles de disque flottant afin de déterminer une ou plusieurs valeurs de couple les plus proches pour la pression et la vitesse prédéterminées les plus proches de la pression de la pompe/unité motrice et de la vitesse de la pompe/unité motrice mesurées, et la dérivée d'un angle de disque flottant à partir des valeurs d'angle correspondant auxdites valeurs de couple les plus proches.

9. Procédé selon la revendication 8, comprenant l'étape supplémentaire de production en sortie d'un signal d'étranglement moteur modifié (37), et dans lequel ledit signal de couple (26) et ledit signal d'étranglement moteur modifié (37) sont générés en fonction d'un modèle mathématique d'éléments de train d'entraînement entre le moteur dudit véhicule et ledit point de connexion du train d'entraînement de ladite pompe/unité motrice (60).

10. Procédé selon la revendication 8 ou 9, comprenant les étapes supplémentaires de validation dudit mode de retard pour qu'il ne se produise qu'en transition après ledit état de veille (206), et de validation dudit mode de propulsion pour qu'il ne se produise qu'en transition après ledit état de veille (206).

11. Procédé selon la revendication 10, comprenant les étapes supplémentaires de :
validation d'un état de pré-propulsion de transition (218, 220, 220) entre le mode de veille et le mode de propulsion dans lequel il est déterminé que ladite pression de pompe/unité motrice dépasse une valeur de seuil avant l'activation dudit mode de propulsion ; et
validation d'un état de pré-retard de transition (210) entre le mode de veille et le mode de retard dans lequel il est déterminé que la pression de pompe/unité motrice est inférieure à une valeur de seuil avant l'activation dudit mode de retard.

12. Procédé selon la revendication 11, comprenant les étapes supplémentaires de :
validation d'un état de fin de propulsion de transition entre le mode de propulsion et le mode de veille ;
validation d'un état de fin de retard de transition entre le mode de retard et le mode de veille ; et
détermination dans lesdits états de transition que des éléments respectifs d'un circuit de commande hydraulique ont correctement changé de condition avant d'activer un mode respectif.

13. Produit de programme informatique comprenant un programme informatique mémorisé sur un support de mémorisation, ledit programme comportant un moyen de code pour exécuter les étapes selon l'une quelconque des revendications 8 à 12.
